(19) Europäisches Patentamt
European Patent Office
Office européen des brevets

(11) **EP 4 439 424 A1**

(12) **EUROPEAN PATENT APPLICATION**

(43) Date of publication:
**02.10.2024 Bulletin 2024/40**

(21) Application number: **24157413.6**

(22) Date of filing: **13.02.2024**

(51) International Patent Classification (IPC):
**G06Q 10/08** (2024.01)   **G06Q 30/018** (2023.01)
**G06Q 50/04** (2012.01)   **G06Q 50/26** (2024.01)

(52) Cooperative Patent Classification (CPC):
**G06Q 30/018; G06Q 10/08; G06Q 50/04; G06Q 50/26**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023057840**

(71) Applicant: **TOYOTA JIDOSHA KABUSHIKI KAISHA**
**Toyota-shi, Aichi-ken, 471-8571 (JP)**

(72) Inventors:
• **FUJIWARA, Teruyoshi**
**TOYOTA-SHI, AICHI-KEN, 471-8571 (JP)**
• **NITTA, Iwao**
**TOYOTA-SHI, AICHI-KEN, 471-8571 (JP)**
• **SUZUKI, Ryota**
**NAGOYA-SHI, AICHI-KEN, 451-6015 (JP)**

(74) Representative: **Cabinet Beau de Loménie**
**158, rue de l'Université**
**75340 Paris Cedex 07 (FR)**

(54) **INFORMATION PROCESSING DEVICE AND INFORMATION PROCESSING METHOD**

(57)    In an information processing device that executes information processing related to a platform used to collect product information of a company included in a supply chain, a control unit (11) acquires traceability-related information included in product information of a target product that is a product of a target company. The control unit (11) sets a reference value according to traceability-related information included in product information of one or more reference products that are products of one or more companies included in the supply chain. The control unit (11) outputs appropriateness of the traceability-related information of the target product using the set reference value.

**FIG. 19**

EP 4 439 424 A1

**Description**

1. Field of the Invention

The present disclosure relates to an information processing device and an information processing method.

2. Description of Related Art

A system is well-known in which information is shared among a plurality of companies that constitutes a supply chain. In this regard, for example, Japanese Unexamined Patent Application Publication No. 2004-171146 discloses a system in which adjacent companies in a supply chain share information using a common platform.

SUMMARY OF THE INVENTION

The present disclosure provides effective technology for ensuring the appropriateness of information on traceability collected in a supply chain.
A first aspect of the present disclosure relates to an information processing device that executes information processing related to a platform used to collect product information of a company included in a supply chain. The information processing device includes a control unit configured to acquire traceability-related information included in product information of a target product that is a product of a target company, set a reference value according to traceability-related information included in product information of one or more reference products that are products of one or more companies included in the supply chain, and output appropriateness of the traceability-related information of the target product using the reference value.
In the first aspect, the one or more reference products may be products of the same type as the target product.
In the first aspect, the one or more reference products may be products of companies that belong to the same level in the supply chain as the target company.
In the first aspect, the one or more reference products may not include a product of a company anonymously participating in the platform.
In the first aspect, the one or more reference products may not include a product of a company that is included in the supply chain and does not participate in the platform.
In the first aspect, setting the reference value may include acquiring an average value or a median value of the traceability related information of the one or more reference products, and setting the reference value according to the acquired average value or the acquired median value.
In the first aspect, setting the reference value according to the average value or the median value may include adding or subtracting a predetermined value to or from the average value or the median value.
In the first aspect, the reference value may be corrected according to a type of the reference product.
In the first aspect, the traceability-related information may include a greenhouse gas emission amount.
In the first aspect, the traceability-related information may include a recycling rate regarding a predetermined raw material.
In the first aspect, the traceability-related information may include a score related to due diligence.
A second aspect of the present disclosure relates to an information processing method that is executed by a computer and relates to a platform used to collect product information of a company included in a supply chain. The information processing method includes acquiring traceability-related information included in product information of a target product that is a product of a target company, setting a reference value according to traceability-related information included in product information of one or more reference products that are products of one or more companies included in the supply chain, and outputting appropriateness of the traceability-related information of the target product using the reference value.
In the second aspect, the one or more reference products may be products of the same type as the target product.
In the second aspect, the one or more reference products may be products of companies that belong to the same level in the supply chain as the target company.
In the second aspect, the one or more reference products may not include a product of a company anonymously participating in the platform.
In the second aspect, the one or more reference products may not include a product of a company that is included in the supply chain and does not participate in the platform.
In the second aspect, setting the reference value may include acquiring an average value or a median value of the traceability related information of the one or more reference products, and setting the reference value according to the acquired average value or the acquired median value.
In the second aspect, setting the reference value according to the average value or the median value may include adding or subtracting a predetermined value to or from the average value or the median value.

In the second aspect, the reference value may be corrected according to a type of the reference product.

In the second aspect, the traceability-related information may include a greenhouse gas emission amount.

A third aspect of the present disclosure relates to a program that causes a computer to execute the information processing method described above, or a storage medium that non-temporarily stores the program.

With each aspect of the present disclosure, it is possible to provide effective technology that ensures the appropriateness of information on traceability collected in the supply chain.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram illustrating an example of a supply chain according to an embodiment;
FIG. 2 is a diagram illustrating an example of a relationship between products supplied through the supply chain;
FIG. 3 is a diagram illustrating an overview of processing performed between a company terminal and a server device;
FIG. 4 is a hardware configuration diagram of a server device according to the embodiment;
FIG. 5 is a hardware configuration diagram of the company terminal according to the embodiment;
FIG. 6 is a software configuration diagram of the server device according to the embodiment;
FIG. 7 is a software configuration diagram of the company terminal according to the embodiment;
FIG. 8 is an example of product information generated by a product information generation unit;
FIG. 9 is an example of a screen output by an authority setting unit;
FIG. 10 is an example of permission information generated by the authority setting unit based on input information;
FIG. 11 is an example of a user interface that includes a list of products that are candidates for a linking target;
FIG. 12 is a diagram illustrating an example of a flow of processing executed by the server device;
FIG. 13 is a diagram illustrating a product tree and an amount of carbon dioxide emitted in each process;
FIG. 14 is an example of a screen outputting the product tree as an image;
FIG. 15 is an example of a product tree when a product to which there is no access authority is hidden;
FIG. 16 is a sequence diagram illustrating processing performed by the server device and the company terminal in first to third phases;
FIG. 17 is a sequence diagram illustrating processing performed by the server device and the company terminal in a fourth phase;
FIG. 18 is a diagram illustrating an example of a procedure that determines a reference product in the embodiment;
FIG. 19 is a flowchart illustrating a processing flow executed by the server device in the embodiment; and
FIG. 20 is a diagram illustrating an example of a procedure that determines a reference product in a modification example of the embodiment.

DETAILED DESCRIPTION OF EMBODIMENTS

A carbon footprint (carbon footprint of products (CFP)) is a measure that converts the emission amount of greenhouse gases emitted throughout a product's lifecycle, from procurement of raw materials to disposal and recycling, into a $CO_2$ amount and displays it on the product. In order to realize CFP, it is important to have traceability, which records each supplier involved in a product's process from procurement of raw materials to disposal and recycling, such that the records can be traced.

The inventors of the present invention discovered the following issue with the above-described system of the related art. That is, in order to ensure the traceability of information such as CFP, it is necessary to collect this information throughout the supply chain. However, there may be cases in which the CFP calculation method or the unit of data used in the calculation differs from company to company. In that case, it becomes difficult to obtain accurate integration results of CFP across the entire supply chain. Further, even when the CFP calculation method or the unit of data used in the calculation is appropriate, there is a possibility that CFP will become an unfavorable value (for example, the CFP is too high) for the entire supply chain due to a lack of effort on the part of the company. Therefore, measures are needed to ensure the appropriateness of information on the traceability collected in the supply chain.

The above-described issue occurs not only in situations where CFP is collected. For example, this issue can arise in any situation where arbitrary information on a product is collected, such as other traceability-related information (for example, raw material recycling rate, due diligence information) or other information (for example, components, identification information) on the product.

Therefore, an information processing device that is one aspect of the present disclosure includes a control unit configured to acquire traceability-related information included in the product information of a target product, which is a product of a target company, set a reference value according to traceability-related information included in product information of one or more reference products that are products of one or more companies included in the supply chain, and output the appropriateness of the traceability-related information of the target product using the reference value.

An information processing device according to the present disclosure executes information processing related to a platform used to collect product information of companies included in a supply chain. Such an information processing device may be a server of a platform. Further, the information processing device may be a server independent from the platform, and may be a server that provides the platform with product information acquired from companies included in the supply chain.

In the information processing device according to the present disclosure, the control unit acquires traceability-related information included in product information of a target product, which is a product of a target company. Traceability-related information is information necessary to ensure traceability. In one example, the traceability-related information may be a greenhouse gas emission amount, a raw material recycling rate, a score regarding due diligence, or the like. In other examples, the traceability-related information may be information necessary for calculations such as the greenhouse gas emission amount (CFP), the raw material recycling rate, or the score regarding the due diligence. Product information including such traceability-related information is provided by the target company.

The control unit sets a reference value according to traceability-related information included in product information of one or more reference products that are products of one or more companies included in the supply chain. In one example, the reference product may be a product of the same type as the target product from among the products of a company included in the supply chain. It is also assumed that there may be cases where a company included in the supply chain does not have a product of the same type as the target product. In that case, the reference product may be a product of a company that belongs to the same level in the supply chain as the target company.

Here, some companies included in the supply chain may anonymously participate in the platform. Further, some of the companies included in the supply chain include companies that do not participate in the platform. Since these companies may require additional measures to ensure their authenticity, their products may be excluded from reference products.

The control unit sets reference values using the traceability-related information of one or more of the reference products described above. In one example, the control unit may acquire an average value or median value of traceability-related information of one or more reference products, and set the reference value according to the acquired average value or the acquired median value. Setting the reference value according to the average value or median value may include, for example, adding or subtracting a predetermined value from the average value or median value. In addition, setting the reference value according to the average value or median value may include setting an upper limit value by adding a predetermined value to the average value or median value, and setting a lower limit value by subtracting a predetermined value from the average value or median value.

For example, the above-described predetermined value may be determined to enable verification of whether the traceability-related information of the target product has been calculated using an appropriate method. As another example, the predetermined value may be determined such that it is possible to verify whether the traceability-related information of the target product is a value (for example, extremely high CFP, extremely low recycling rate, extremely low due diligence score) that is unfavorable for the entire supply chain.

The traceability-related information such as the greenhouse gas emission amount, the raw material recycling rate, or the score regarding due diligence may differ depending on the type of product. As an example, when the final product manufactured by the supply chain is a battery for an automobile, the CFP of the product included in the battery has the following tendency.

Positive electrode > Cell > Negative electrode > Liquid

Therefore, when one or more reference products are of a different type than the target product, that is, when one or more reference products are products of a company that belongs to the same level in the supply chain as the target company, the reference value may be corrected depending on the type of reference product.

Once the reference value is set using the method described above, the control unit uses the reference value to output the appropriateness of traceability-related information for the target product. In one example, the control unit may compare the traceability-related information of the target product with a reference value to verify whether the traceability-related information of the target product is calculated in an appropriate method, and/or whether the traceability-related information of the target product is unfavorable for the entire supply chain, and then the control unit may output the verification result (appropriateness). Outputting the appropriateness may include, for example, transmitting the appropriateness to a terminal of the target company.

With the information processing device according to the present disclosure, it is possible to ensure the appropriateness of information on the traceability collected in the supply chain.

Hereinafter, specific embodiments of the present disclosure will be described based on the drawings. Unless otherwise specified, the hardware configuration, module configuration, functional configuration, and the like described in each embodiment are not intended to limit the technical scope of the disclosure.

Embodiment

The information processing system according to the present embodiment is a system that provides information on products supplied by a supply chain that includes a plurality of companies. Information on products is typically information on traceability. Companies belonging to the supply chain may be determined as appropriate depending on the attributes of the products and the like.

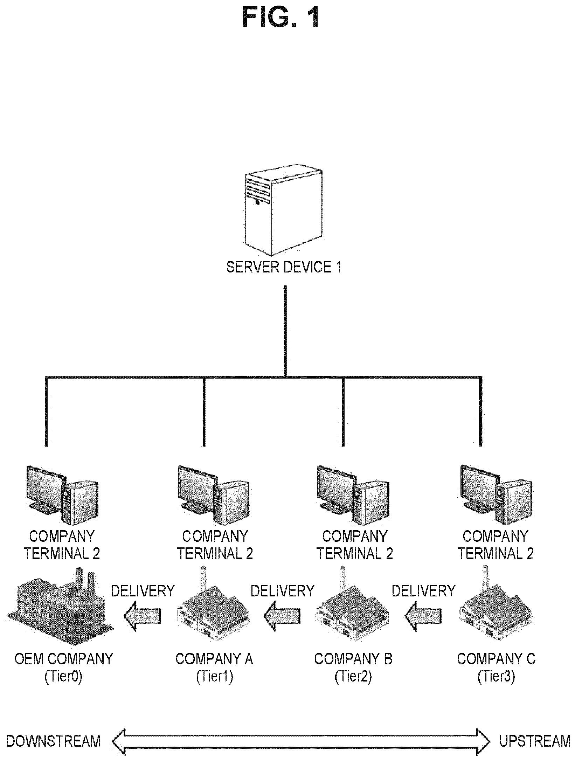

First, the structure of the supply chain will be described. FIG. 1 is a diagram illustrating an example of the supply chain according to the present embodiment. The supply chain illustrated in FIG. 1 is composed of an OEM company and a plurality of companies that are suppliers. The example in FIG. 1 assumes a supply chain that manufactures products related to cars, such as cars themselves and batteries. The OEM company assembles the final products. A plurality of companies (companies A to C) that are suppliers supply parts, materials, assemblies, or the like for manufacturing the final product. Each of the companies that are suppliers manufactures one or more products and delivers the products to a company located one level below. This is repeated by the companies, and the final product is obtained in the final process (that is, OEM company).

In the present embodiment, in each level of the supply chain, the side that delivers products is called the upstream side, and the side that purchases the products and manufactures new products is called the downstream side. In this specification, companies located on the upstream side are referred to as upstream companies, and companies located on the downstream side are referred to as downstream companies. Further, products manufactured by upstream companies are referred to as upstream products, and products manufactured by downstream companies are referred to as downstream products. The downstream product includes the upstream products (that is, the upstream products are used in the manufacturing process of the downstream product). Further, in the present embodiment, a level included in the supply chain is referred to as a tier. Tier0 is the lowest level (corresponding to an OEM company) that assembles the final product, and as the level progresses through Tiers1, 2, 3, the level moves to the upstream side. Depending on the level of focus, downstream companies may be upstream companies. For example, a company B located in Tier2 is a downstream company in relation to Tier3, but is an upstream company in relation to Tier1. In this way, the definitions of upstream and downstream companies can change at each level.

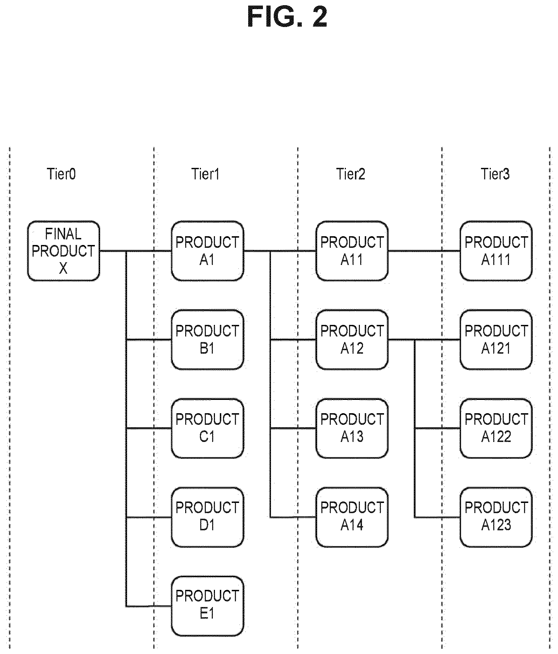

FIG. 2 is a diagram illustrating a relationship between products supplied by the supply chain. Here, the supply relationship of a plurality of products constituting a final product X is represented by a tree diagram. In this example, the final product X is manufactured by assembling products A1, B1, C1, D1, .... The product A1 is manufactured by assembling products A11, A12, A13, .... In this way, the relationship between the products that constitute the final product can be represented by a tree diagram in which each product is a node. Hereinafter, a tree diagram related to a specific final product will be referred to as a product tree.

A server device 1 according to the present embodiment collects information (hereinafter referred to as product information) on products manufactured by each company and information used to link pieces of the product information with each other from a terminal (company terminal 2) corresponding to each company, and generates a product tree based on these. Further, the product information includes traceability-related information (for example, information on the greenhouse gas emission amount), and by tracing the product tree, it is possible to track carbon footprints and the like. The traceability-related information may include any information that can be a target for ensuring traceability.

As illustrated in FIG. 1, the information processing system according to the present embodiment includes the server device 1 and a plurality of the company terminals 2.

The company terminal 2 is a terminal corresponding to each of a plurality of companies that constitute a supply chain. The number of terminals corresponding to each company may be arbitrary. Further, the terminal corresponding to a target company may include a terminal of a company (for example, an agency company) that performs operations related to the target company.

The server device 1 collects information used to generate a product tree from each of the company terminals 2, and generates the product tree based on the collected information. Further, the server device 1 can execute processing related to traceability (typically, processing that calculates an emission amount of carbon dioxide ($CO_2$), and the like) based on the generated product tree. Further, the execution results of the processing can be transmitted to the company terminal 2.

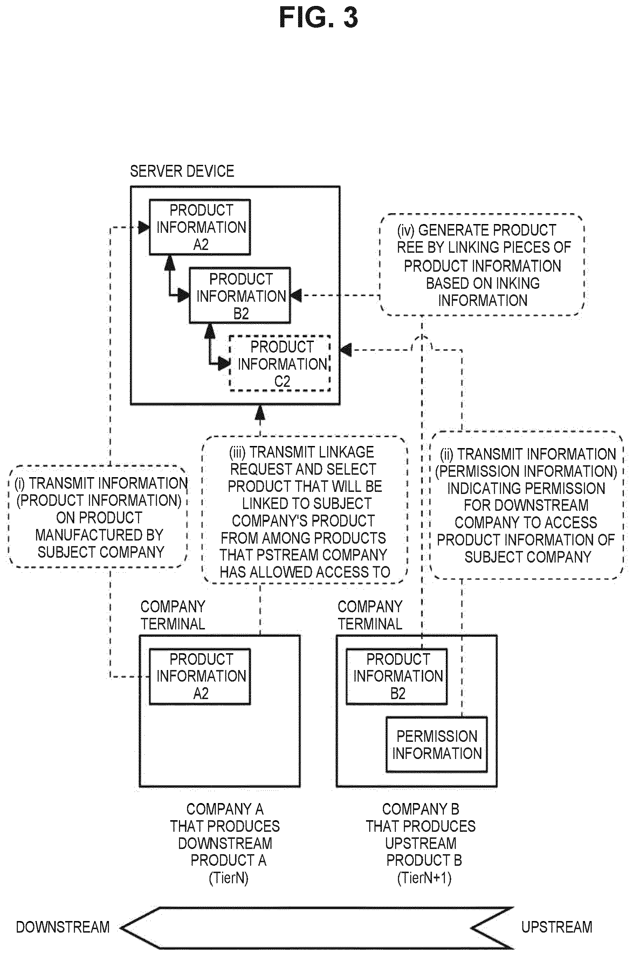

Next, an overview of processing by which the server device 1 generates a product tree will be described using FIG. 3. FIG. 3 is a diagram illustrating an overview of processing performed between the company terminal 2 and the server device 1. In the example of FIG. 3, it is assumed that a downstream company, a company A, and an upstream company, a company B, exist in any level. It is assumed that the company B manufactures a product B1 and delivers it to the company A, and the company A uses the product B1 to manufacture a product A1. That is, in the example of FIG. 3, the product B1 becomes a child node of the product A1 on the product tree.

In order to generate the product tree, the company terminal 2 corresponding to each company transmits information on a product manufactured by the company to the server device 1. In this example, the company terminal 2 corresponding to the company A transmits product information (referred to as product information A2) on the product A1 to the server device 1. Similarly, the company terminal 2 corresponding to the company B transmits product information (referred to as product information B2) on the product B1 to the server device 1. Product information of each company is stored in the server device 1.

An operation used to link pieces of product information stored in the server device 1 is performed by the company terminal 2. In one example, a person in charge in a downstream company logs into the server device 1 from the company terminal 2 using an account of the downstream company, and selects an upstream product that is a linking target of the downstream product, which is a subject company's product. In this way, the linkage between the pieces of the product information is performed from the downstream product to the upstream products. The server device 1 links the pieces of the product information based on the selection.

However, when all the products included in the supply chain and information on those products are presented as options when selecting the product as the linking target, the confidentiality of information on companies that constitute the supply chain and information on the products manufactured by those companies is compromised. Further, it may not be reasonable to expose the entire product tree to one supplier.

Therefore, the server device 1 according to the present embodiment grants access authority for the product information of the upstream product to the downstream company in advance in response to a request from the upstream company. Then, the server device 1 allows references from the downstream company within the scope of the granted authority.

In an example in FIG. 3, the company terminal 2, which corresponds to the company B, which is an upstream company, transmits a request (information) to the server device 1 instructing to "grant the company A the authority to access the product information B". When the server device 1 receives a linkage request from the company terminal 2 corresponding to the company A, it provides only a list of pieces of product information that the company A has been given the access authority for, and allows the company A to select the product as a linking target. In addition, when there is a request to refer to the product tree from the company terminal 2 corresponding to the company A, the server device 1 provides the company terminal 2 with a product tree in which information other than the information that the company A is granted the access authority for is kept confidential. This allows information on unrelated companies and products to be kept confidential.

Hardware Configuration

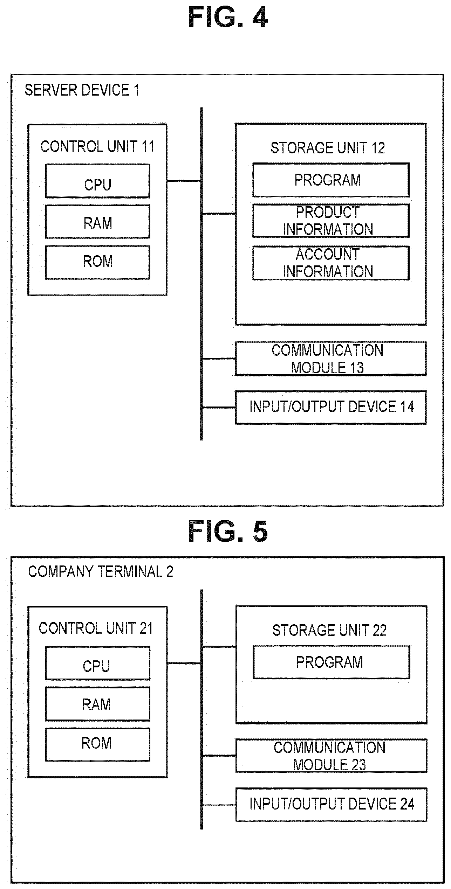

Next, the hardware configuration of each device constituting the system will be described. FIG. 4 is a diagram schematically illustrating an example of the hardware configuration of the server device 1 according to the present embodiment. The server device 1 is configured as a computer having a control unit 11, a storage unit 12, a communication module 13, and an input/output device 14.

The server device 1 can be configured as a computer having a processor (CPU, GPU, and the like), a main storage device (RAM, ROM, and the like), and an auxiliary storage device (EPROM, hard disk drive, removable media, and the like). The auxiliary storage device stores an operating system (OS), various programs, various tables, and the like, and by executing the programs stored therein, it is possible to realize each function (software module) meeting a predetermined purpose as described below. However, some or all of the functions may be realized as a hardware module by a hardware circuit such as an ASIC or an FPGA.

The control unit 11 is an arithmetic unit that realizes various functions of the server device 1 by executing a predetermined program. The control unit 11 can be realized, for example, by a hardware processor such as a CPU. Further, the control unit 11 may include a RAM, a read only memory (ROM), a cache memory, and the like.

The storage unit 12 stores information. The storage unit 12 is composed of a storage medium such as a RAM, a magnetic disk, or a flash memory. The storage unit 12 stores a program executed by the control unit 11, data used by the program, and the like. Further, a database is constructed in the storage unit 12, and product information collected from the company terminals 2 and account information on companies are stored in the database. Details of the storage unit 12 will be described below.

The communication module 13 is a communication interface that connects the server device 1 to a network. The communication module 13 may be configured to include, for example, a network interface board, a wireless communication interface for wireless communication, and the like. The server device 1 can perform data communication with other computers (for example, each company terminal 2) via the communication module 13.

The input/output device 14 receives an input operation performed by an operator and presents information to the operator. Specifically, the input/output device 14 includes a device for input such as a mouse and a keyboard, and a device for output such as a display and a speaker. The input/output device may be integrally configured with, for example, a touch panel display.

In the specific hardware configuration of the server device 1, components can be omitted, replaced, or added as appropriate depending on the embodiment. For example, the control unit 11 may include a plurality of hardware processors. The hardware processors may be composed of a microprocessor, a FPGA, a GPU, or the like. The input/output device 14 may be omitted, or an input/output device (for example, an optical drive or the like) other than the exemplified one may be added. Further, the server device 1 may be configured by a plurality of computers. In this case, the hardware configurations of the computers may or may not match.

FIG. 5 is a diagram schematically illustrating an example of the hardware configuration of the company terminal 2 according to the present embodiment. The company terminal 2 is configured as a computer having a control unit 21, a storage unit 22, a communication module 23, and an input/output device 24.

Similar to the server device 1, the company terminal 2 can be configured as a computer having a processor (CPU, GPU, or the like), a main storage device (RAM, ROM, or the like), and an auxiliary storage device (EPROM, hard disk drive, removable media, and the like). However, some or all of the functions (software modules) may be realized as a hardware module by, for example, a hardware circuit such as an ASIC or an FPGA.

The control unit 21 is an arithmetic unit that realizes various functions (software modules) of the company terminal 2 by executing a predetermined program. The control unit 21 can be realized, for example, by a hardware processor such as a CPU. Further, the control unit 21 may include a RAM, a read only memory (ROM), a cache memory, and the like.

The storage unit 22 stores information. The storage unit 22 is composed of a storage medium such as a RAM, a magnetic disk, and/or a flash memory. The storage unit 22 stores a program executed by the control unit 21, data used by the program, and the like.

The communication module 23 is a communication interface that connects the company terminal 2 to the network. The communication module 23 may be configured to include, for example, a network interface board, a wireless communication interface for wireless communication, and the like. The company terminal 2 can perform data communication with other computers (for example, the server device 1) via the communication module 23.

The input/output device 24 are devices that accept input operations performed by the operator and present information to the operator. Specifically, the input/output device 24 includes a device for input such as a mouse and a keyboard, and a device for output such as a display and a speaker. The input/output device may be integrally configured with, for example, a touch panel display.

In the specific hardware configuration of the company terminal 2, similar to the server device 1, components can be omitted, replaced, or added as appropriate depending on the embodiment.


Software Configuration


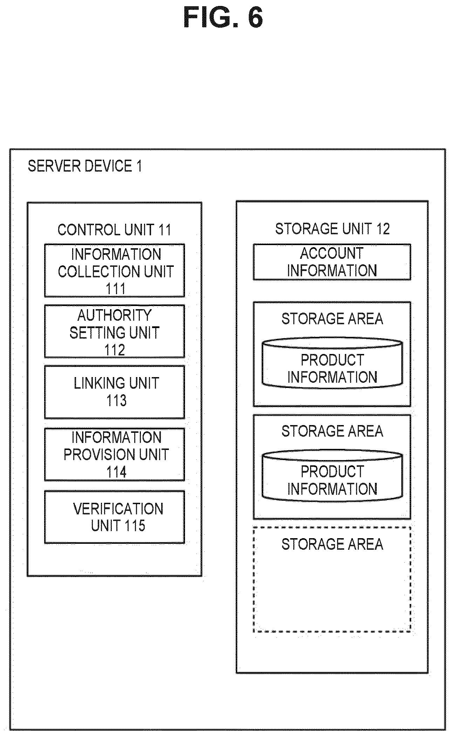

Next, the software configuration of each device constituting the system will be described. FIG. 6 is a diagram schematically illustrating the software configuration of the server device 1 according to the present embodiment. In the present embodiment, the control unit 11 includes five software modules: an information collection unit 111, an authority setting unit 112, a linking unit 113, an information provision unit 114, and a verification unit 115. Each software module may be realized by executing a program stored in the storage unit 12 by the control unit 11 (CPU). The information processing executed by the information collection unit 111, authority setting unit 112, linking unit 113, information provision unit 114, and verification unit 115 described below is synonymous with the information processing executed by the control unit 11.

The information collection unit 111 is configured to receive product information transmitted from the company terminal 2 and execute a process of storing the product information in the storage unit 12. The authority setting unit 112 is configured to receive information (hereinafter referred to as permission information) for setting access authority for product information from the company terminal 2. Further, the authority setting unit 112 is configured to execute processing that sets access authority for product information stored in the storage unit 12 based on the received information.

The linking unit 113 is configured to acquire information used to link pieces of product information from the company terminal 2 by interacting with the company terminal 2. Further, the linking unit 113 is configured to execute processing that writes information representing a linking relationship to the product information stored in the storage unit 12 based on the acquired information. Further, the linking unit 113 is configured to receive a request to assign terminal information, and in response to the request, execute processing that adds terminal information to the product information stored in the storage unit 12. A product tree is generated by reflecting the linking and terminal assignment. That is, generating the product tree is performed by storing linking information and terminal information in the storage unit 12. The linking unit 113 is configured to generate a product tree according to the results of linking and terminal assignment.

The information provision unit 114 is configured to execute information processing related to the product tree and output the results of the information processing. Outputting the results of executing the information processing may include processing that provides information on the generated product tree to the company terminal 2. In one example, the information provision unit 114 is configured to generate information on the product tree and output the information on the generated product tree.

Further, the information provision unit 114 executes information processing to integrate traceability-related information based on the generated product tree. In one example, the information provision unit 114 acquires an integrated result (for example, total amount of $CO_2$ emissions) of the traceability-related information corresponding to all processes until the final product is manufactured by repeatedly integrating traceability-related information while tracing the linking relationships between pieces of the product information based on the product tree,

The verification unit 115 is configured to verify the appropriateness of traceability-related information included in the collected product information and output the verification result. Outputting the verification result may include processing that transmits information on the verification result to the company terminal 2. In one example, the verification unit 115 may transmit an alert to the company terminal 2 in response to obtaining a verification result that the traceability-related information is not appropriate. Details of information processing related to verifying the appropriateness of traceability-related information will be described below.

In the present embodiment, the storage unit 12 is configured to include a plurality of logical storage areas. Different access authority can be set for each of the plurality of storage areas, such as an area where access authority has been granted to the company A, an area where access authority has been granted to the company B, and an area where access privileges are granted to both companies A and B. The authority setting unit 112 sets the access authority by storing the product information received from the company terminal 2 in an appropriate storage area. A specific processing method will be described below.

Account information is stored in the storage unit 12. In the present embodiment, the operator of each company logs into the server device 1 via the company terminal 2 using the account of the corresponding company, and thereby the interaction between the server device 1 and the company terminal 2 is performed. Account information is information on accounts corresponding to each company constituting the supply chain. Logging in using an account is an example of accessing the server device 1 as a corresponding company. However, the method of accessing the server device 1 is not limited to this example, and may be selected as appropriate depending on the embodiment.

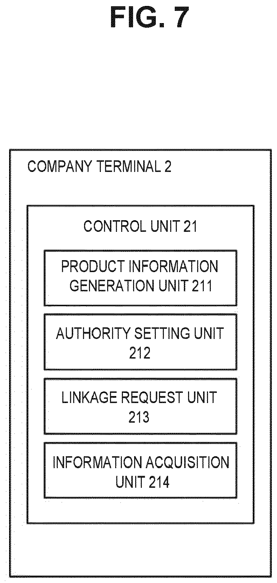

FIG. 7 is a diagram schematically illustrating the software configuration of the company terminal 2 according to the present embodiment. In the present embodiment, the control unit 21 includes four software modules: a product information generation unit 211, an authority setting unit 212, a linkage request unit 213, and an information acquisition unit 214. Each software module may be realized by executing a program stored in the storage unit 22 by the control unit 21 (CPU). The information processing executed by the product information generation unit 211, authority setting unit 212, linkage request unit 213, and information acquisition unit 214 described below is synonymous with the information processing executed by the control unit 21.

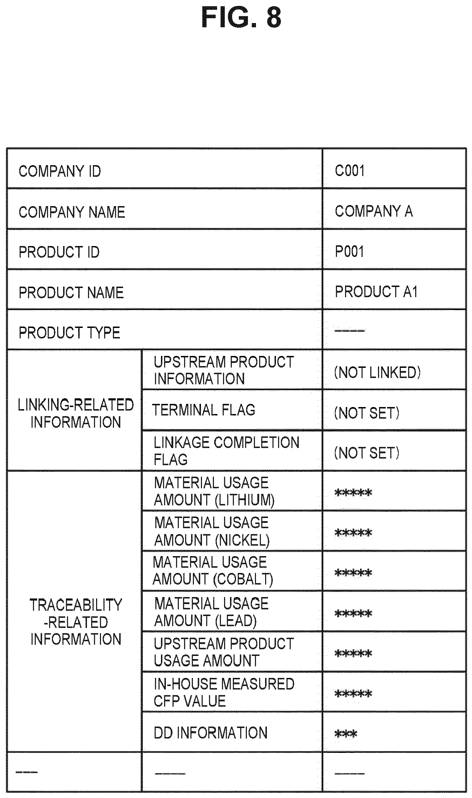

The product information generation unit 211 is configured to generate information (product information) on the product of the company corresponding to the company terminal 2. FIG. 8 is an example of product information generated by the product information generation unit 211. Product information may be entered via an operator of the device. In the present embodiment, the product information includes fields of company ID, company name, product ID, product name, and product type. The company ID and company name are the identifier and name of the company (that is, the company that uses the company terminal 2) that manufactures a target product. The product ID and product name are the identifier and name of the target product. The product type is the type (for example, "positive electrode", "cell", "negative electrode", "liquid") of the target product.

Further, the product information is configured to include linking-related information. The linking-related information is information used to identify the upstream product linked to the target product. In the present embodiment, the linking-related information includes fields of "upstream product information", "terminal flag", and "linkage completion flag".

The upstream product information field is configured to store information used to identify product information corresponding to an upstream product (in other words, a product (product included in the target product) used in the manufacturing process of the target product) linked to the target product. The upstream product information field is used when the server device 1 links products. Basically, at the stage when the product information is generated, the target product is not linked to the upstream product, so the upstream product information field does not need to store a value indicating the upstream product.

The terminal flag field is configured to store a flag indicating whether the target product is a leaf node, that is, a node located at the most upstream (terminal) position in the product tree. In the present embodiment, since a plurality of company terminals 2 transmits product information, this flag is used to determine whether a product in the product tree is linked to another product on the upstream side or whether no further linkage occurs (whether the target product located at the most upstream position?). That is, the terminal flag field is used when the server device 1 determines the linkage between products. Basically, at the stage when product information is generated, the linking relationship of the target product is not determined, so "0 (currently not terminal)" may be stored in the terminal flag field. Finally, to generate the product tree, the product information of each company stored in the server device 1 is set to one of the following states: "Linked with upstream product" or "Terminal flag set to '1'".

The linkage completion flag field is configured to store a flag indicating whether linkage with an upstream product has been completed for the target product. In the present embodiment, a product in the product tree may be linked to a plurality of upstream products. For example, a case where a product C 1 is manufactured using the product A1 and the product B 1 as parts can be exemplified. When the target product is located at an intermediate node rather than a leaf node, it is difficult to determine whether the linkage is complete or whether another product will be further linked based only on the presence or absence of a product as a linking target. When this cannot be determined, the product tree cannot be determined. The linkage completion flag is used to identify this. In other words, the linkage completion flag is status information indicating whether all linking is completed. The linkage completion flag field is used when the server device 1 determines the linkage between products. Basically, at the stage when the product information is generated, the linking relationship of the target product is undetermined, so "0 (further linking may occur)" may be stored in the linking completion field.

By referring to the terminal flag for product information located at a leaf node and to the linkage completion flag for product information located at an intermediate node, it is possible to determine whether the product information is determined. The flag (terminal flag) stored in the terminal flag field is an example of "terminal information".

Further, the product information is configured to include traceability-related information. In one example, traceability-related information included in product information may include information on the amount of materials (for example, upstream products) used per unit of product manufactured, information regarding the recycling rate of a predetermined raw material, the amount of greenhouse gas emissions during product manufacturing, due diligence-related information, or a combination thereof. The predetermined raw material may be, for example, lithium, nickel, cobalt, lead, graphite, and the like. The recycling rate may be expressed directly or indirectly, such as by a combination of the total usage amount and the recycled material usage amount. These values correspond to the process of manufacturing the target product.

In the example illustrated in FIG. 8, the traceability-related information included in product information A2 includes the amount of upstream products used (the amount of upstream products used per unit of the product A1 manufactured) and the in-house measured CFP value (the amount of $CO_2$ emitted during the manufacturing activities of the product A1). In addition, the traceability-related information included in the product information A2 does not include information (for example, the amount of greenhouse gases emitted until the upstream product is manufactured) on the process up to the manufacturing of the upstream product.

The traceability-related information may be selected as appropriate depending on the embodiment. In one example, CFP may include Scope 1, Scope 2, and Scope 3 emission amounts. Scope 1 may be direct greenhouse gas emission amounts. Scope 2 may be indirect emission amounts associated with the use of electricity, heat and steam supplied by other companies. Scope 3 may be indirect emission amounts other than Scope 1 and Scope 2. In addition, in one example, due diligence-related information may be technical documentation that indicates, with respect to a product containing the target raw materials (for example, cobalt, natural graphite, lithium, nickel), the amount of the raw material contained within the product, and whether the smelter or the like has fulfilled its obligations for responsible mineral procurement. In another example, the due diligence-related information may include a score indicating the degree to which the above-described obligations are met.

The product information generation unit 211 is configured to acquire such information via the operator of the company terminal 2 and transmit it to the server device 1 at an arbitrary timing.

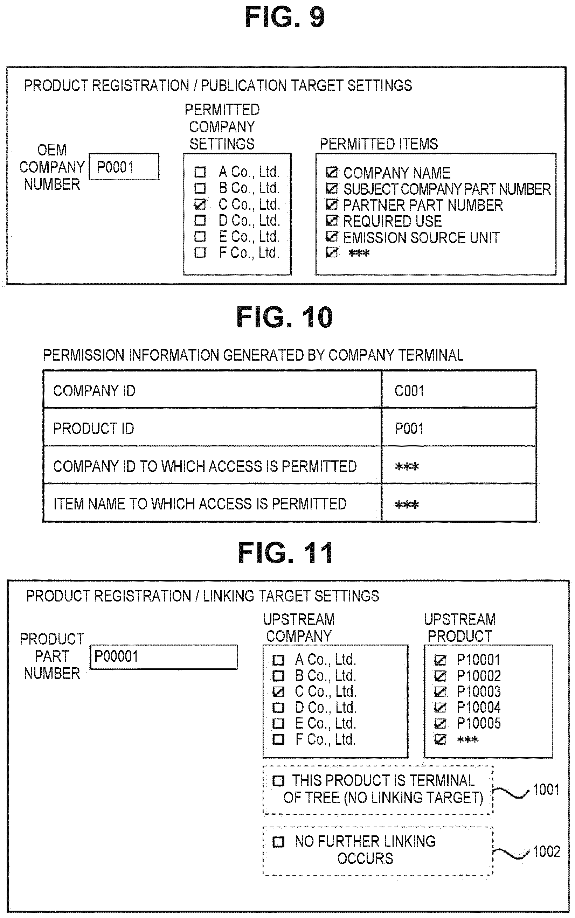

The authority setting unit 212 is configured to designate downstream companies that are permitted to access product information transmitted from the company terminal 2 to the server device 1. FIG. 9 is an example of a screen output by the authority setting unit 212. As illustrated in FIG. 9, the authority setting unit 212 is configured to accept the designation of downstream companies to which access is permitted for any subject company's products. FIG. 10 is an example of permission information generated by the authority setting unit 212 based on input information. The authority setting unit 212 is configured to transmit permission information to the server device 1 at any timing. The permission information is an example of a "permission command". The access authority may be set for each product information, or may be set for each item ("permission item" in the figure) included in the product information. This allows for partial disclosure, for example, disclosing the existence of a product but not disclosing specific information regarding the materials used, usage amounts, and the like.

The list of companies presented on the screen of FIG. 9 can be a list of companies that have had transactions with the subject company in the past. Therefore, the server device 1 may store data (transaction data) regarding past transactions for each company, and generate a list of companies based on the transaction data. The transaction data may include, for example, the identifier of the target product, the identifier of the company that manufactured the product, the date of the transaction, and the like.

The linkage request unit 213 is configured to request the server device 1 to link the subject company's product information transmitted to the server device 1 with an upstream product. In one example, first, the linkage request unit 213 transmits its own company ID and product ID to the server device 1, and requests linkage of product information corresponding to the product ID. The server device 1 generates a user interface that includes a list (that is, candidates for a linking target) of pieces of product information that the target company is permitted to access, and provides the generated user interface to the company terminal 2. FIG. 11 is an example of the user interface that includes a list of products that the target company is permitted to access.

The list of products presented in FIG. 11 can be a list of products that have transactions with the subject company in the past. The server device 1 may generate the list further based on stored transaction data.

Next, the linkage request unit 213 is configured to allow the operator to select an upstream product to be linked from the list. Further, the linkage request unit 213 is configured to transmit a pair of the identifier of the product (downstream product) that is the linking source and the identifier of the upstream product that is the linking target to the server device 1. The server device 1 can link pieces of the product information to each other in accordance with this.

When there is no upstream product linked to the target product, this can be clearly indicated, for example, by checking a checkbox 1001 in FIG. 11. In this case, the pieces of the product information are not linked to each other, and the server device 1 sets the terminal flag of the corresponding product information to be "1". When an upstream product linked to the target product already exists, that is, when the node corresponding to the target product is not a leaf node, the check operation is prohibited.

Further, when no further linkage is to be performed for the target product, this can be clearly indicated by checking a checkbox 1002 in FIG. 11. In this case, the server device 1 sets the linkage completion flag of the corresponding product information to "1". When the terminal flag is set as "1", the corresponding product information is the terminal, and therefore is excluded from the target of linking. In this case, the linkage completion flag may be handled arbitrarily. In one example, in response to the terminal flag being set to "1", the linkage completion flag may also be set to "1". In another example, when the terminal flag is set to "1", the linkage completion flag may remain "0" and be ignored.

In this way, the linkage request unit 213 is configured to issue either (1) a request used to link a target product and an upstream product, or (2) a request that adds a terminal flag indicating that the target product is the terminal in the supply chain. When declaring completion of linkage, the linkage request may include a request to grant a linkage completion flag indicating that no further linkage will occur for the target product. This allows the server device 1 to determine the state of the product tree.

The information acquisition unit 214 is configured to request the server device 1 to provide a product tree and output the information transmitted from the server device 1. In addition, in the company terminal 2 of the OEM company, the information acquisition unit 214 is configured to request the server device 1 to provide an integrated result (integrated results of traceability-related information corresponding to all processes until the final product is manufactured) of traceability-related information, and output the integrated result provided by the server device 1.

Details of Information Processing that generates Product Tree

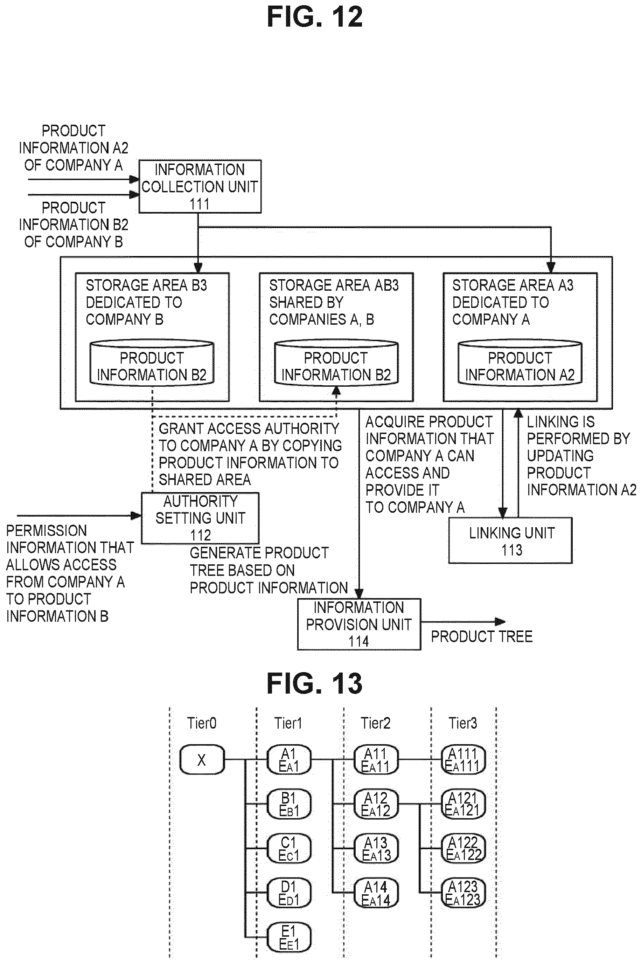

Next, the specific contents of the processing performed by the server device 1 and the company terminal 2 in generating the product tree will be described. FIG. 12 is a diagram illustrating an example of the flow of processing executed by the server device 1 based on a request from the company terminal 2.
The processing performed by the server device 1 can be roughly divided into the following four phases.

(1) First phase of receiving product information transmitted from company terminal 2 and storing the received product information
(2) Second phase of receiving permission information transmitted from company terminal 2 and setting access authority for product information according to the received permission information
(3) Third phase of linking pieces of product information to each other by interacting with company terminal 2
(4) Fourth phase of providing information on the product tree based on the linking results

In the example of FIG. 12, the company A is assumed to be a downstream company, and the company B is assumed to be an upstream company. In addition, the product manufactured by the company A is set as a product A1, and the product manufactured by the company B is set as a product B1. Further, product information corresponding to the product A1 is set as product information A2, and product information corresponding to the product B1 is set as product information B2.

In the first phase, the information collection unit 111 of the server device 1 acquires product information from the product information generation unit 211 of the company terminal 2. In the example of FIG. 12, the server device 1 acquires product information A2 from the company terminal 2 corresponding to the company A, and acquires the product information B2 from the company terminal 2 corresponding to the company B. The information collection unit 111 stores the product information A2 in a storage area (hereinafter referred to as a storage area A3) that only the company A is granted access authority for. Further, the information collection unit 111 stores the product information B2 in a storage area (hereinafter referred to as a storage area B3) that only the company B is granted access authority for. In this way, the information collection unit 111 stores product information transmitted from any company in a dedicated storage area that only the corresponding company is granted access authority for.

In the second phase, the authority setting unit 112 of the server device 1 receives permission information from the authority setting unit 212 of the company terminal 2, and sets access authority for product information according to the received permission information. As illustrated in FIG. 10, the permission information associates a product with a company that is permitted to access the product information of the product.

In the example of FIG. 12, it is assumed that the authority setting unit 112 has received permission information to permit access from the company A, which is a downstream company, to the product information B2 of an upstream company. In this case, the authority setting unit 112 copies the product information B2 stored in the storage area B3 to a storage area (hereinafter referred to as a storage area AB3) that both the companies A and B are given access authority for. As a result, the product information B2 becomes accessible from both the company A and the company B. When access authority is not set for a specific item included in the product information, that item is excluded from being copied to the storage area AB3.

In the following description, a storage area for which access authority is granted only to a specific company will be referred to as a "dedicated storage area", and a storage area for which a plurality of companies is granted access authority will be referred to as a "shared storage area".

In this way, copying of product information is executed by the server device 1 in response to receiving permission information from the company terminal 2. That is, it can be said that, by transmitting permission information to the server device 1, the company terminal 2 performs an operation of copying the product information identified by the permission information from the dedicated storage area of the target company to the shared storage area that can be accessed by downstream companies.

In the third phase, the linking unit 113 of the server device 1 receives a linking request from the linkage request unit 213 of the company terminal 2, and links pieces of product information with each other based on the received linking request.

First, the linking unit 113 receives a linking request from the company terminal 2. The linking request is transmitted from the company terminal 2 of the downstream company. In the example of FIG. 12, it is assumed that the company terminal 2 of the company A has transmitted the linking request. The linking request includes the company ID and the product ID of the target product. The linking unit 113 acquires product information stored in a storage area accessible from the company, and generates a list of the acquired pieces of product information. In the example of FIG. 11, the company A can access the product information B2 stored in the storage area AB3. Therefore, in the company terminal 2 of the company A, the product information B2 can be selected as the linking target.

The linkage request unit 213 of the company terminal 2 presents a list to the operator and allows the operator to select a product to be linked. In this example, the product A1 and the product B1 are linked to each other. For example, the operator inputs information indicating that the upstream product of the product A1 is the product B1 via the input/output device 24. The linkage request unit 213 transmits data (linking data) for associating the upstream product (product B1) and the downstream product (product A1) with each other to the linking unit 113.

As described with reference to FIG. 8, the product information is provided with a field (linking-related information) related to the product that becomes a linking target. The linking unit 113 stores information corresponding to the product information B2 (that is, upstream product) in the linking-related information included in the product information A2, based on the linking data described above. For example, the linking-related information includes an identifier of an upstream product, an identifier of a company that manufactures the upstream product, and the like.

The linking-related information may include a pointer to product information as a linking target. The pointer points to an address of product information corresponding to the upstream product. Through the processing described above, a part of a tree structure in which the product information of the downstream product is a parent node and the product information of the upstream product is a child node is formed.

No further linking is performed at the terminal of the product tree. In this case, instead of transmitting linkage data, the linkage request unit 213 transmits data indicating that the product is the terminal of the tree. In the example of FIG. 11, when the checkbox 1001 is checked, data indicating that the product is the terminal of the tree is transmitted. When the linking unit 113 receives the data, the linking unit 113 sets "1" in the terminal flag field of the corresponding product information.

Further, when it is clear that no further linking will occur for the target product, the linkage request unit 213 transmits the linking data along with data, which clearly indicates that. In the example of FIG. 11, when the checkbox 1002 is checked, data indicating that no further linking will occur for the product is transmitted. When the linking unit 113 receives the data, the linking unit 113 sets "1" in the linkage completion flag field of the corresponding product information. When the terminal flag is set, "1" may be set for both flags.

That is, in the third phase, the linkage request unit 213 issues to the server device 1 either

(A) "Request to designate the upstream product as the linking target (including request to set the linkage completion flag)", or
(B) "Request to set the terminal flag".

The product tree of the final product is completed by linking or assigning terminal flags to all companies in the supply chain. The process of generating this product tree may be arbitrary. In one example, companies may execute the third phase in a random manner (referred to as shotgun approach). With this method, there is no need to manage the execution of the third phase, so the processing load on the server device 1 can be reduced. In another example, the third phase may be executed sequentially starting from the most upstream company (referred to as a bucket brigade method). In this case, the server device may permit the linking or the setting of the terminal flag at TierN after the linking at TierN-1 is completed. With this method, the completion of the product tree can be easily managed.

In the fourth phase, the information provision unit 114 of the server device 1 generates information on the product tree based on the stored product information and outputs the information on the product tree. Generating information on the product tree refers to processing that generates various types of information (for example, an image illustrating the linking relationship between products using a tree diagram) on a product after links between nodes are formed by linking pieces of the product information together. This processing that generates information on the product tree is an example of information processing regarding the product tree. In order to generate information on the product tree, it is necessary that all pieces of the product information be linked to each other and that the terminal flags of all leaf nodes be set to "1". The information provision unit 114 can appropriately generate the information when such conditions are met.

As described with reference to FIG. 2, the product tree in the present embodiment is a tree diagram representing the supply relationship between pieces of the product information in the supply chain. The information provision unit 114 can generate an image representing a tree diagram based on the product information. The generated product tree may be stored in the storage unit 12 of the server device 1.

Further, when generating information on the product tree, the information provision unit 114 may integrate traceability-related information defined in each piece of product information and output the result.

Here, integration of traceability-related information will be described using FIG. 13. FIG. 13 is a diagram illustrating a plurality of products constituting the final product X and the amount of carbon dioxide ($CO_2$) emitted in each process of producing these products. For example, it is assumed that $E_{A12}$ [g] of carbon dioxide is emitted in the process of producing a product A12 in the figure. Further, it is assumed that the product is composed of three upstream products A121 to A123. In this way, upstream products included in a certain product are also referred to as "included products". Here, the total amount of carbon dioxide emitted until a certain target product is produced can be obtained by repeating processing of passing on the $CO_2$ emission amounts associated with upstream products to a downstream product between companies in each of two adjacent layers, from the most upstream product that is a leaf node to the target product.

In the example of FIG. 13, when the target product is A12, by summing the $CO_2$ emission amounts corresponding to included products (upstream products A121 to A123) and the $CO_2$ emission amount corresponding to the product A12, the total amount of carbon dioxide emitted until the product A12 is produced can be calculated. That is, the integrated $CO_2$ emission amounts for the product A12 are as follows.

$$I_{A12} = E_{A12} + E_{A121} \times U_{A121} + E_{A122} \times U_{A122} + E_{A123} \times U_{A123} \ [g]$$

Here, $E_{A121}$, $E_{A122}$, and $E_{A123}$ are respectively $CO_2$ emission amounts per unit amount when producing the products A121, A122, and A123. Further, $U_{A121}$, $U_{A122}$, and $U_{A123}$ are respectively the usage amounts of products A121, A122, and A123 used for producing the product A12. This usage amount is an example of the amount of material used per product production amount, which is included in the traceability-related information. The $CO_2$ emission amount of the final product (the product of the most downstream company) can be obtained by sequentially executing the above-described calculations from the product of the most upstream company to the final product.

The same applies when the target product is a product A1. When the target product is A1, by integrating the $CO_2$ emission amount corresponding to the product A1 and the $CO_2$ emission amounts corresponding to products A11, A12, A13, A14, which are included products, the total amount of carbon dioxide emitted during manufacturing activities until the product A1 is produced can be calculated.

The integrated value may be stored in the storage unit 12 in association with the product, or may be included as part of the product information. That is, the product information corresponding to the product A12 may hold both $E_{A12}$, which is the emission amount in a single process, and $I_{A12}$, which is the emission amount after integration.

Traceability-related information after integration is used again when executing integration for downstream products. By executing this processing at each level starting from the most upstream level, traceability-related information (for example, cumulative value of $CO_2$ emission amounts) is successively passed on downstream. Finally, the traceability-related information is passed on to the final product, such that traceability-related information (for example, total $CO_2$ emission amount) corresponding to the entire period until the final product is produced can be obtained.

In this way, when generating information on the product tree, the information provision unit 114 may repeatedly execute a process of sequentially integrating traceability-related information defined in each piece of product information from the most upstream to the most downstream. In the above-described example, carbon dioxide emission amounts were exemplified as a target of integration, but the traceability-related information that is a target of integration may also be a recycling rate regarding a predetermined raw material, a score regarding due diligence, or the like. In addition, when the traceability-related information is numerical values, the integration may be performed by numerical calculations, or when the traceability-related information is information (for example, due diligence-related information and the like) other than numerical values, the integration may be simply information collection.

In another example, the product information may include information (hereinafter referred to as "location information"; typically, an address, a pointer, and the like) indicating the location of traceability-related information of the corresponding product. In this case, traceability-related information may not be included in the product information. Integration may also include collecting location information included in product information.

The information provision unit 114 may output the generated product tree in an image format. Further, at the same time, traceability-related information corresponding to any product may be output.

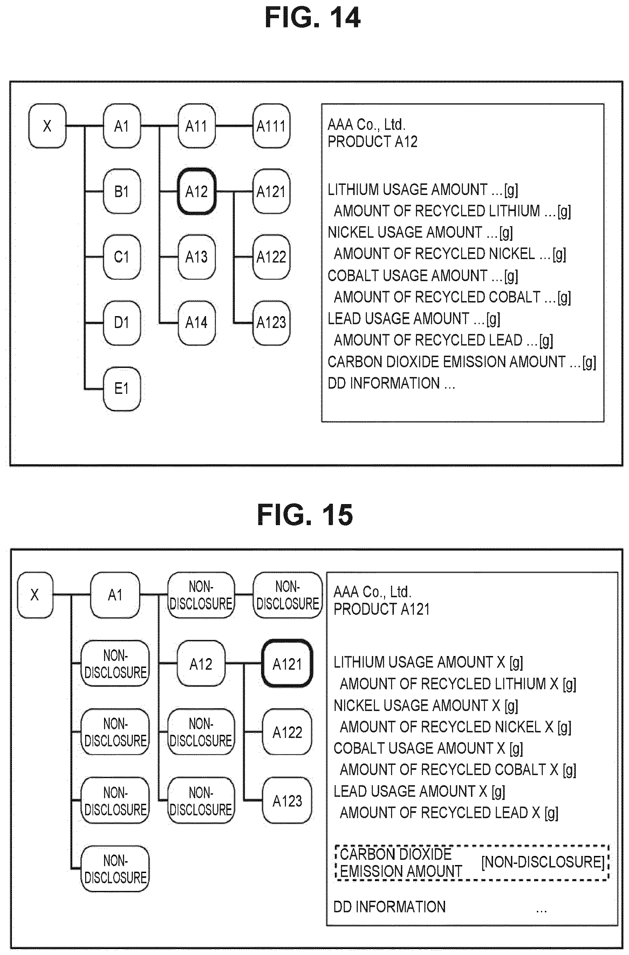

FIG. 14 is an example of a screen outputting a product tree as an image. The illustrated screen includes an image illustrating the supply relationship of a plurality of products that constitutes the final product using a tree diagram. Further, by selecting any product, it is possible to view traceability-related information corresponding to the product or integrated results (for example, total value of carbon dioxide emission amount from the most upstream) of traceability-related information corresponding to the entire period until the product is produced. Such information can be outputted via the input/output device 14 of the server device 1 based on the operation of the operator of the server device 1.

Further, the information provision unit 114 may provide the generated product tree to the company terminal 2 in response to a request from the company terminal 2 (information acquisition unit 214). It may not be appropriate to disclose the entire product tree to a specific company. Therefore, when the information provision unit 114 provides a product tree to the company terminal 2 corresponding to a certain company, the information provision unit 114 may perform processing of not disclosing the range to which the company does not have access authority.

For example, in the example of FIG. 13, it is assumed that the information provision unit 114 receives a request to disclose a product tree from the company terminal 2 corresponding to the company that produces the product A12. Here, it is assumed that the company has been granted access authority only for the products A121, A122, and A123. That is, the company cannot access product information other than the three products and the downstream product A1. In this case, the information provision unit 114 provides the company terminal 2 with a product tree that does not disclose information about products to which the company does not have access authority.

FIG. 15 is an example of a product tree when products for which there is no access authority are not disclosed. In this example, for products that are not disclosed, the product tree is displayed with detailed information (or its existence itself) concealed.

In addition, in cases where the existence of a product is disclosed, but access authority is not granted for specific items in the corresponding product information, as indicated by the dotted line in the figure, concealment processing is performed only on the specific items. In the illustrated example, it is shown that the amount of carbon dioxide emitted when producing the product A121 is not disclosed.

On the other hand, even when there are products (or items) in the tree that the company does not have access authority for, the above-described integration of traceability-related information is executed without being affected by this. For example, in the illustrated example, the carbon dioxide emission amount for the product A121 is not disclosed, but this does not affect the processing that calculates the total carbon dioxide emission amount for the product A12.

Processing Flow

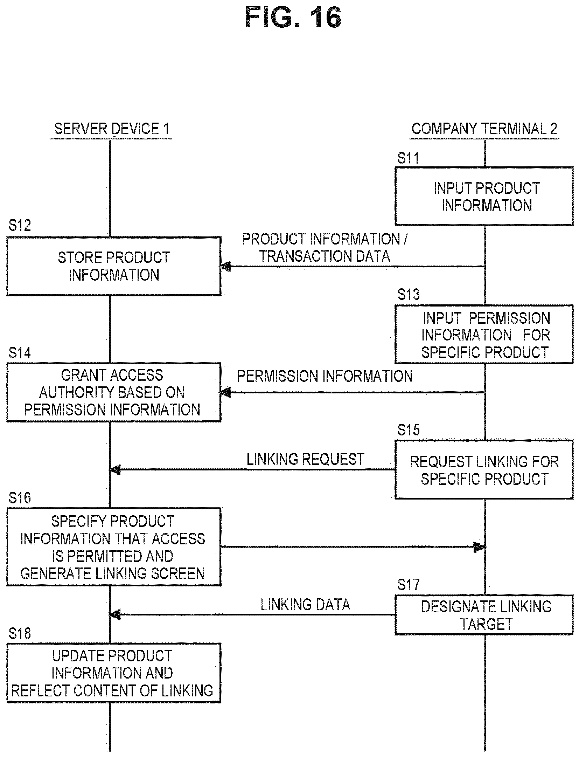

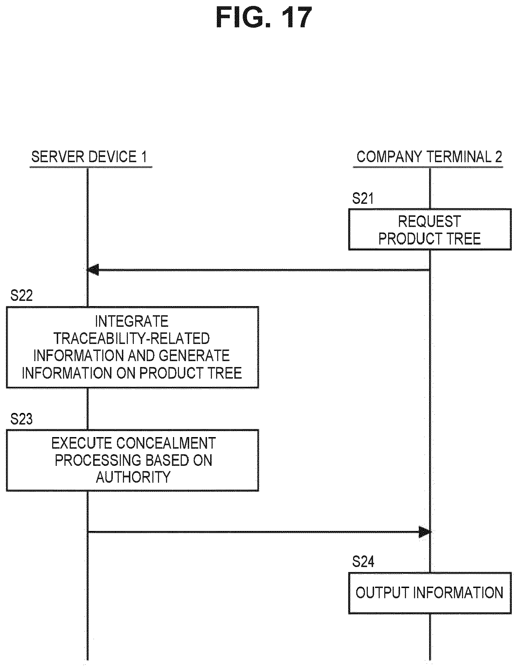

Next, the flow of processing executed by the server device 1 and the company terminal 2 when registering product information of the subject company using the company terminal 2 will be described with reference to FIGS. 16 and 17. FIG. 16 is a sequence diagram corresponding to the first to third phases described above.

In one example, the interaction between the server device 1 and the company terminal 2 is initiated by an operator of each company logging into the server device 1 via the company terminal 2 using a corresponding company account. In this example, it is assumed that the operator of each company is logging into the server device 1 using his or her company's account.

First, in step S11, the product information generation unit 211 of the company terminal 2 acquires the product information of the subject company through the operator, and transmits the acquired product information to the server device 1. The transmitted product information is received by the server device 1 (information collection unit 111) and stored in the storage unit 12 (step S 12). In this case, the information collection unit 111 stores the product information in a storage area for which access authority is only granted to companies that produce the corresponding product.

Next, in step S13, the authority setting unit 212 of the company terminal 2 receives, via the operator, input of information (permission information) specifying the downstream company to which access is permitted for the product information transmitted in step S11. In this step, a user interface as described with reference to FIG. 9 may be provided to allow the operator to specify a combination of an arbitrary product and a downstream company that is permitted to access the product information. The input permission information is transmitted to the server device 1.

In step S14, the authority setting unit 112 of the server device 1 grants access authority for the target product information based on the received permission information. In this step, as described with reference to FIG. 12, the authority setting unit 112 copies the target product information to a shared storage area that has been granted access authority for a plurality of companies, in such a manner that access authority for any product information is granted to any company. When there is no storage area that an appropriate access authority has been granted, processing may be performed in which a new storage area is created and access authority is granted to an appropriate company.

Next, in step S15, the linkage request unit 213 of the company terminal 2 transmits data (linkage request) requesting the server device 1 to link the product information transmitted to the server device 1 with an upstream product. The linking request includes the company ID of the subject company and the product ID of the target product.

In step S16, the server device 1 (linking unit 113) generates a list of pieces of product information that the target company is permitted to access, and provides the company terminal 2 with a user interface screen containing the list. In this step, the server device 1 may provide the company terminal 2 with a user interface as described with reference to FIG. 11, and allow the operator to designate a combination of an arbitrary product and an upstream product linked to the product.

In step S17, the linkage request unit 213 of the company terminal 2 receives from the operator a designation of a combination of a target product and an upstream product linked to the product. The linkage request unit 213 generates data (linking data) indicating the linkage between the upstream product and the downstream product, and transmits the generated linking data to the server device 1.

In step S18, the linking unit 113 of the server device 1 updates the stored product information based on the linking data to reflect the content of linking between pieces of the product information. Linking between pieces of the product information may be performed by storing information (identifier, pointer, and the like) on the upstream product in linking-related information included in the product information of the downstream product.

When there is no downstream company, the processing of steps S13 to S14 may be omitted. Similarly, when an upstream company does not exist (when there is no linking target for the target product), the processing for setting the terminal flag described above may be executed instead of requesting linking between pieces of the product information. In this case, the processing of steps S15 to S18 described above is omitted.

FIG. 17 is a sequence diagram corresponding to the fourth phase described above. First, in step S21, the information acquisition unit 214 of the company terminal 2 requests the server device 1 to provide a product tree. The request includes, for example, the identifier of the target product. The target product may be a final product or a product (intermediate product) other than the final product.

The server device 1 (information provision unit 114) that received the request generates information on the product tree by the processing described above (step S22). In this case, the information provision unit 114 executes a processing that integrates traceability-related information defined in each product information from the most upstream to the most downstream. The results of the integration may be reflected in each piece of product information.

Next, in step S23, the server device 1 executes a processing that conceals information to which access authority has not been granted, based on the access authority that the target company has. For example, when the existence of product information of other companies regarding a certain company is not disclosed, the server device 1 may perform processing to conceal the existence of the product information. Further, when only a specific item included in the product information is not disclosed, the server device 1 may execute processing to conceal the contents of the item. The information on the product tree subjected to the concealment processing is provided to the company terminal 2 (information acquisition unit 214) and output (step S24).

Details of Information Processing to Verify Appropriateness of Traceability-Related Information

Next, the specific details of information processing that verifies appropriateness of traceability-related information contained in the product information collected from each company will be described. In one example, information processing that verifies the appropriateness of traceability-related information may be executed using generation of a product tree as a trigger. The processing that verifies the appropriateness of the traceability-related information may be arbitrarily determined after the product tree is generated and before the information processing that integrates the traceability-related information is executed.

In the following, description will be given using the CFP value ($CO_2$ emission amount) as an example of traceability-related information to be verified. Verification of the appropriateness of the CFP value is executed for each of all products included in the product tree. In one example, verification of the CFP value may be executed sequentially from the most upstream product in the product tree toward the final product (Tier0 product).

The verification unit 115 of the server device 1 accesses a dedicated storage area for which an access authority is granted only to the company (target company) that manufactures the product (target product) to be verified, and acquires information (product type) registered in the "product type field" of the product information of the target product.

The verification unit 115 specifies all products registered in the product tree including the target product. The verification unit 115 accesses product information in a dedicated storage area for which access authority is only granted to companies that manufacture each of the specified products, and extracts all products for which information matching the "product type" of the target product is registered in the "product type field". The verification unit 115 determines the extracted product (product with the same "product type" as the target product) as a reference product.

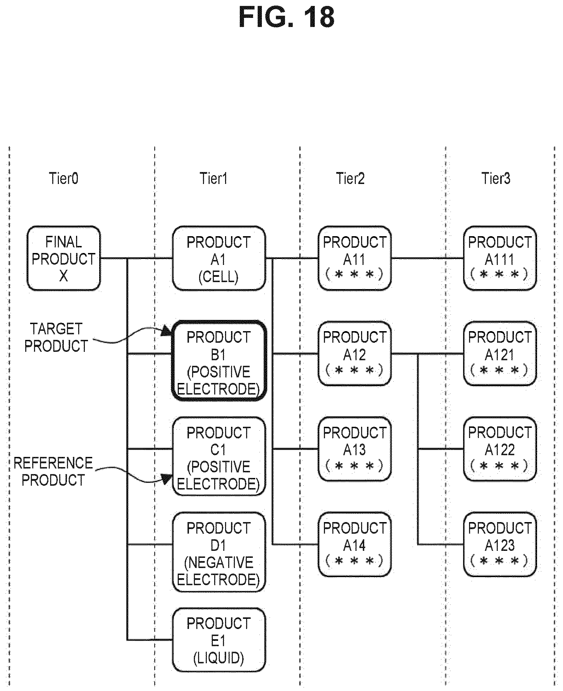

FIG. 18 is a diagram illustrating an example of a procedure that determines the reference product. In the example illustrated in FIG. 18, a product B 1 belonging to Tier1 is the target product. The "product type" of the target product B 1 is a "positive electrode" of a battery. In this case, among the products registered in the product tree, the product of which the "product type" matches the target product B1 is a product C1. Therefore, the verification unit 115 determines the product C1 to be the reference product.

In the example illustrated in FIG. 18, the product C1 as the reference product belongs to the same level (Tier1) as the target product B 1, but the target product and the reference product may belong to different levels. That is, as long as the "product type" matches the target product B1, the reference product may belong to any level in the product tree.

Further, in the example illustrated in FIG. 18, among the products registered in the product tree, there is only one product, the product C1, of which the "product type" matches that of the target product B1, but it is also assumed that there is a plurality of products of which the "product type" matches that of the target product B 1. In that case, the verification unit 115 determines all of the products of which the "product type" matches that of the target product B1 as reference products.

However, among a plurality of products of which the "product type" matches that of the target product B1, products for which the appropriateness of "in-house measured CFP value" has not yet been verified, products that have failed verification of the appropriateness of "in-house measured CFP values", products of companies that anonymously participate in the platform, and products of companies that are included in the supply chain but do not participate in the platform may be excluded from the reference products. This is because companies that anonymously participate in the platform and companies that do not participate in the platform require separate information processing to ensure authenticity.

The verification unit 115 accesses a dedicated storage area for which access authority is granted only to companies (reference companies) that manufacture the reference products determined as described above, and acquires the "in-house measured CFP value" included in the product information of the reference product. When there is a plurality of reference products, the verification unit 115 acquires the "in-house measured CFP value" for each of the reference products.

The verification unit 115 sets a reference value based on the "in-house measured CFP value" of the reference product. In one example, the reference value may include a set of an upper limit reference value and a lower limit reference value. In that case, the verification unit 115 may be configured to calculate the upper limit reference value by adding a predetermined value to the "in-house measured CFP value" of the reference product and calculate the lower limit reference value by subtracting a predetermined value from the "in-house measured CFP value" of the reference product. In another example, the reference value may include only either the upper limit reference value or the lower limit reference value.

In addition, when there is a plurality of reference products, the verification unit 115 may be configured to set a reference value by calculating the average value or median value of "in-house measured CFP values" of the reference products, adding a predetermined value to the calculated average value or median value, and/or subtracting a predetermined value from the calculated average or median value.

Here, the above-described predetermined value is set such that it can be determined whether the "in-house measured CFP value" of the target product is appropriate. "Appropriate" here means, for example, that the "in-house measured CFP value" of the target product is calculated using an arithmetic expression predefined by the platform, that the unit of data assigned to the arithmetic expression is the unit predefined by the platform, and/or that the "in-house measured CFP value" calculated using the arithmetic expression and data unit predefined by the platform is a value that is preferable for the entire supply chain.

Once the reference value is set as described above, the verification unit 115 verifies the appropriateness of the "in-house measured CFP value" of the target product by comparing the "in-house measured CFP value" of the target product with the reference value. In one example, the verification unit 115 may determine that the "in-house measured CFP value" of the target product is appropriate when the "in-house measured CFP value" of the target product is equal to or less than the upper limit reference value and equal to or greater than the lower limit reference value. In another example, the verification unit 115 may determine that the "in-house measured CFP value" of the target product is appropriate when the "in-house measured CFP value" of the target product is equal to or less than the upper limit reference value, or when the "in-house measured CFP value" of the target product is equal to or greater than the lower limit reference value,

The verification unit 115 outputs results of the above-described verification. In one example, outputting the verification results may include transmitting the verification results from the server device 1 to the company terminal 2 of the target company. When the above-described verification fails (when it is determined that the "in-house measured CFP value" of the target product is not appropriate), the verification unit 115 may output an alert in addition to the verification result. In one example, the alert may be information that prompts the use of the predefined arithmetic expression and unit of data in the platform. In another example, the alert may be information that prompts corporate efforts to reduce CFP values.

Processing Flow

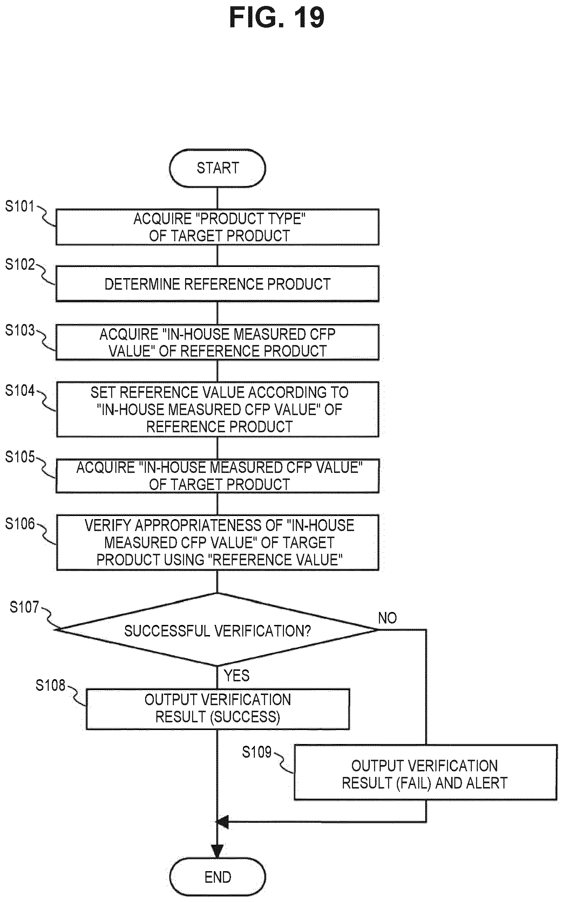

FIG. 19 is a flowchart illustrating a processing flow executed by the server device 1 when verifying the appropriateness of traceability-related information. In one example, the processing flow illustrated in FIG. 19 may be executed using generation of a product tree as a trigger.

Although the processing flow illustrated in FIG. 19 is executed by the processor of the server device 1, the description will be given assuming that the software module of the server device 1 is the execution entity. Further, the processing flow illustrated in FIG. 19 is sequentially executed for all products included in the generated product tree. In one example, the processing flow illustrated in FIG. 19 may be repeatedly executed while sequentially shifting the target product from the most upstream product in the generated product tree toward the final product.

In the processing flow of FIG. 19, when a triggering event (for example, generation of a product tree) occurs, the verification unit 115 of the server device 1 acquires product information of the target product (step S 101). Specifically, the verification unit 115 accesses product information stored in a dedicated storage area for which access authority is only granted to the target company that manufactures the target product, and acquires information registered in the "product type field". After completing the processing in step S101, the verification unit 115 executes the processing in step S102.

In step S 102, the verification unit 115 determines a reference product based on the product tree that includes the target product. Specifically, the verification unit 115 specifies all products registered in the product tree including the target product. The verification unit 115 accesses product information in a dedicated storage area for which access authority is only granted to companies that manufacture each of the specified products, and extracts all products for which information matching the "product type" of the target product is registered in the "product type field". The verification unit 115 determines the extracted product as a reference product.

In addition, when the products extracted above include a product for which the appropriateness of the "in-house measured CFP value" has not yet been verified, a product that has failed verification of the appropriateness of the "in-house measured CFP value", a product of a company that anonymously participates in the platform, or a product of a company that is included in the supply chain but does not participate in the platform, the verification unit 115 excludes those products and determines a reference product. After completing the processing in step S102, the verification unit 115 executes the processing in step S103.

In step S 103, the verification unit 115 accesses a dedicated storage area for which access authority is only granted to the company (reference company) that manufactures the reference product determined in step S102, and acquires information (in-house measured CFP value) registered in the "in-house measured CFP value field" of the product information in the reference product. In this case, when there is a plurality of products determined as reference products in step S102, the verification unit 115 acquires the "in-house measured CFP value" for each of the reference products. After completing the processing in step S103, the verification unit 115 executes the processing in step S104.

In step S104, the verification unit 115 sets a reference value based on the "in-house measured CFP value" of the reference product acquired in step S103. In one example, the verification unit 115 calculates the upper limit reference value by adding a predetermined value to the "in-house measured CFP value" of the reference product, and calculates the lower limit reference value by subtracting a predetermined value from the "in-house measured CFP value" of the reference product.

When there is a plurality of products determined as reference products in step S102, the verification unit 115 calculates the average value or median value of the "in-house measured CFP values" of the plurality of reference products. Next, the verification unit 115 sets an upper limit reference value and a lower limit reference value by adding a predetermined value to the calculated average value or median value, and by subtracting a predetermined value from the calculated average value or median value. After completing the processing in step S104, the verification unit 115 executes the processing in step S105.

In step S105, the verification unit 115 accesses a dedicated storage area for which access authority is only granted to the target company, and acquires the information (in-house measured CFP value) registered in the "in-house measured CFP value field" of the product information in the target product. After completing the processing in step S105, the verification unit 115 executes the processing in step S106.

In step S106, the verification unit 115 verifies the appropriateness of the "in-house measured CFP value" of the target product by comparing the "in-house measured CFP value" of the target product with the reference value set in step S104. In one example, the verification unit 115 determines whether the "in-house measured CFP value" of the target product is equal to or less than the upper limit reference value and equal to or greater than the lower limit reference value. After completing the processing in step S106, the verification unit 115 executes the processing in step S107.

In step S107, the verification unit 115 determines whether the "in-house measured CFP value" of the target product has been successfully verified. In this case, when it is determined in step S106 that the "in-house measured CFP value" of the target product is equal to or less than the upper limit reference value and equal to or greater than the lower limit reference value, the verification unit 115 determines that the verification has been successful (affirmative determination in step S107). Further, when it is determined in step S106 that the "in-house measured CFP value" of the target product is greater than the upper limit reference value or smaller than the lower limit reference value, the verification unit 115 determines that the verification has failed (negative determination in step S107).

When an affirmative determination is made in step S107, the verification unit 115 executes the processing in step S108. In step S108, the verification unit 115 outputs a verification result (a verification result that the "in-house measured CFP value" of the target product is appropriate). As an example, the verification unit 115 may output the verification result through the input/output device 14 of the server device 1, and may transmit the verification result to the company terminal 2 of the target company through the communication module 13 of the server device 1.

Further, when a negative determination is made in step S107, the verification unit 115 executes the processing of step S109. In step S109, the verification unit 115 outputs a verification result (a verification result that the "in-house measured CFP value" of the target product is not appropriate). As an example, the verification unit 115 may output the verification result through the input/output device 14 of the server device 1, and may transmit the verification result and alert to the company terminal 2 of the target company through the communication module 13 of the server device 1. The alert may be information that prompts the use of the arithmetic expression and data unit predefined by the platform. Alternatively, the alert may be information that prompts corporate efforts to reduce the CFP value.

When the verification unit 115 completes the processing of step S108 or step S109, it ends the execution of the processing flow of FIG. 19. Then, the verification unit 115 may shift the target product to another product registered in the product tree and repeat the processing flow of FIG. 19.

As described above, in this embodiment, in a system that collects product information from the company terminal 2 of a company belonging to a supply chain and generates a product tree, by comparing the traceability-related information included in the product information of the target product with the reference value, the appropriateness of the traceability-related information is verified. In this case, since the reference value is determined using traceability-related information of products of the same type as the target product from among the products included in the product tree, it is possible to verify whether the traceability-related information of the target product is calculated using an appropriate arithmetic expression and unit of data, and/or whether the traceability-related information of the target product is preferable for the entire supply chain.

Further, in the present embodiment, among products of the same type as the target product, a product for which the appropriateness of the "in-house measured CFP value" has not yet been verified, a product that has failed verification of the appropriateness of the "in-house measured CFP value", a product of a company that anonymously participates in the platform, and a product of a company that is included in the supply chain but does not participate in the platform are excluded from the reference products, so a more suitable reference value can be set. As a result, it becomes possible to more accurately verify whether the traceability-related information of the target product has been calculated using an appropriate arithmetic expression and unit of data and/or whether the traceability-related information of the target product is preferable for the entire supply chain.

Further, in the present embodiment, when it is determined that the traceability-related information of the target product is not appropriate (when verification fails), by alerting the target company, it is possible to encourage the company to recalculate the "in-house measured CFP value" in an appropriate manner and/or to encourage the company to make efforts toward reducing the "in-house measured CFP value".

Therefore, according to the present embodiment, it is possible to ensure the appropriateness of traceability-related information of products supplied by the supply chain.

Modification Example of Embodiment

In the above-described embodiment, an example is described in which a product of the same type as a target product is determined as a reference product. In this modification example, an example will be described in which a product of a different type from the target product is determined as the reference product.

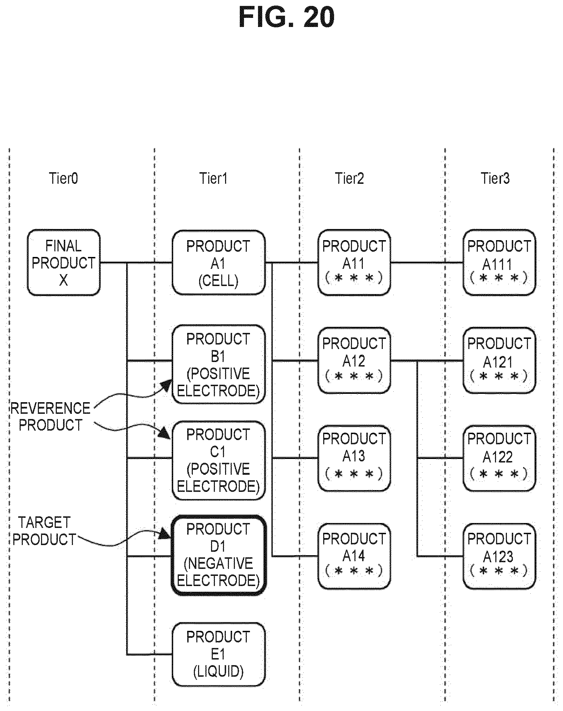

FIG. 20 is a diagram illustrating an example of a procedure that determines a reference product in this modification example. In the example illustrated in FIG. 20, a product D1 belonging to Tier1 is the target product. The "product type" of the target product D1 is a "negative electrode" of a battery. Further, it is assumed that among the products registered in the product tree, there is no product of which the "product type" matches that of the target product D1.

When there is no product of which the "product type" matches that of the target product D1 among the products registered in the product tree, the verification unit 115 determines a reference product from among other products (product A1, product B 1, product C1, product E1 in FIG. 20) belonging to the same level (Tier1) as the target product D1. In this case, a plurality of products among other products belonging to Tier1 may be determined as reference products, but it is assumed that the "product types" of the plurality of reference products are the same.

In the example illustrated in FIG. 18, among the other products belonging to Tier1, the products of which the "product type" is a "positive electrode" of a battery are the product B1 and the product C1, so these two products B1 and C1 can be determined as reference products. On the other hand, since the product A1 is the only product of which the "product type" is a "cell" of a battery, when a product of which the "product type" is the "cell" is to be determined as a reference product, only the product A1 will be the target. Similarly, when a product of which the "product type" is a "negative electrode" of a battery is determined as a reference product, only the product E1 is the target.

Among the products belonging to the same level as the target product, which "product type" of the product is to be determined as the reference product may be arbitrarily selected. As an example, the selection may be made according to the "product type" of the remaining products after excluding a product for which the appropriateness of the "in-house measured CFP value" has not yet been verified, a product that has failed verification of the appropriateness of the "in-house measured CFP value", a product of a company that anonymously participates in the platform, and a product of a company that is included in the supply chain but does not participate in the platform.

When the reference product is determined as described above, the verification unit 115 sets a reference value using the "in-house measured CFP value" of the reference product. In this modification example, first, as in the embodiment described above, a reference value is calculated by adding and/or subtracting a predetermined value to the "in-house measured CFP value (average value or median value)" of the reference product. Next, the calculated reference value is corrected according to the "product type" of the reference product. This is because the CFP value when a product is manufactured per unit amount tends to be as follows depending on the type of product.

Positive electrode > Cell > Negative electrode > Liquid

Therefore, the verification unit 115 in this modification example corrects the reference value calculated above according to the above-described tendency and the "product type" of the reference product. In the example illustrated in FIG. 20, the "product type" of the target product D1 is the "negative electrode", and the "product type" of the reference product is the "positive electrode". Based on the above tendency, the CFP value when a "positive electrode" per unit amount is manufactured is greater than the CFP value when a "negative electrode" per unit amount is manufactured. Therefore, when the "product type" of the target product D1 is a "negative electrode and the "product type" of the reference product is a "positive electrode", the verification unit 115 corrects the reference value calculated above to the decreasing side.

In addition, when the "product type" of the reference product has a lower CFP value when the product is manufactured per unit amount than the "product type" of the target product, the reference value calculated above may be corrected to the increasing side. The amount of correction of the reference value may be appropriately set according to the above-described tendency.

When the reference value is corrected as described above, the verification unit 115 uses the corrected reference value to verify the appropriateness of the "in-house measured CFP value" of the target product, and outputs the verification result.

With this modification example, even when the product tree that includes the target product does not include a product with the same "product type" as that of the target product, it is possible to accurately verify the appropriateness of the "in-house measured CFP value" of the target product.

Other Embodiments

The embodiments described above are merely examples, and the present disclosure may be implemented with appropriate changes within the scope of the gist thereof. For example, the configurations and processing described in the present disclosure can be implemented in any combination as long as no technical contradiction occurs.

Further, in the description of the embodiment, the server device 1 stores the product information in the database, but the product information may be stored by mediums other than the database.

Further, in the description of the embodiment, an example is given in which the server device 1 completes the product tree by executing the first to fourth phases, but the role of the server device 1 may be distributed to a plurality of company terminals 2. For example, product information may be stored by a distributed database using blockchain infrastructure. In this case, a product information database may be configured by a plurality of company terminals 2. In this case, a smart contract may be used to execute the processing of each phase described above. For example, the processing in the second phase may be executed when an account of a certain company writes permission information to the database as a trigger. Further, the processing in the third phase may be executed when an account of a certain company writes a linking request to the database as a trigger.

In addition, in the description of the embodiment, the phase in which the server device 1 receives product information on upstream products and the phase in which the server device 1 receives permission information corresponding to the product information are described separately, but both may be received at the same time. Similarly, in the description of the embodiment, the phase in which the server device 1 receives product information on downstream products and the phase in which the server device 1 receives a linking request corresponding to the product information are described separately, but both may be received at the same time.

In addition, in the description of the embodiment, the platform is provided by the server device 1, but the platform is not limited to this. For example, the server device 1 may be a server independent from the platform, and may be a server that provides information obtained from the company terminal 2 to the platform.

Further, in the description of the embodiment, each piece of product information is stored in the storage unit of the server device 1, but it may be stored in a distributed manner in a plurality of company terminals 2. In that case, the dedicated storage area may be located only in the company terminal 2 of the corresponding company. Further, the shared storage area may be distributed and arranged across a plurality of company terminals 2, which are related to the sharing. In another example, metadata (for example, information used to specify a product) of the product information may be held by the server device 1, and product information of each company may be held in the company terminal 2 of each company.

Further, in the description of the embodiment, although an example is given in which adjacent companies in the supply chain are allowed access to arbitrary product information, product information may also be shared between companies that are not adjacent in the supply chain. For example, when information sharing between companies is necessary for purposes such as legal compliance, companies that have no direct transactional relationship may share specific product information. Even in this case, as in the first embodiment, a shared storage area for which access authority is granted to each company is provided, and necessary data is copied. The shared storage area can be created based on the permission of the company of which product information is being referenced. A confidential key may be used for access control of the dedicated storage area and the shared storage area. In this case, electronic authentication for access control may be performed using a public key authentication infrastructure. When blockchain infrastructure is used for each storage area, this access control may be executed by smart contracts.

In addition, in the description of the embodiment, although the second phase is started by transmitting permission information from the company terminal 2 of the upstream company to the server device 1, the second phase may be started from the company terminal 2 of the downstream company. In this case, information (permission request) requesting an access authority with respect to the upstream product may be transmitted from the company terminal 2 of the downstream company to the server device 1, and the company terminal 2 of the upstream company may generate permission information in response to this. Further, the permission request and the linking data may be transmitted to the server device 1 at the same time from the company terminal 2 of the downstream company. When the product as a linking target can be specified by the downstream company (by product number, or the like), the downstream company can also transmit the linking data before granting an access authority.

Further, the setting of access authority to the storage area may be realized by the operating system of the server device 1, or may be realized by other authentication methods. For example, it is also possible to use public key cryptography. Further, when implementing a system using a blockchain infrastructure, the access authority may be granted using an electronic key.

In addition, in the description of the embodiment, although the phase in which the server device 1 receives product information on an upstream product and the phase in which the server device 1 receives permission information corresponding to the product information are described separately, both may be received at the same time. Similarly, in the description of the embodiment, although the phase in which the server device 1 receives product information on a downstream product and the phase in which the server device 1 receives a linking request corresponding to the product information are described separately, both may be received at the same time.

Further, in the above-described embodiment, a plurality of companies included in the supply chain are described as companies that manufacture products. However, companies included in the supply chain do not necessarily have to be companies that manufacture products. For example, companies that transport, import, store, and wholesale products may also be included in the companies that constitute the supply chain. In one example, some of the companies may be companies that do not execute manufacturing processes, such as trading companies, sales agents, import agents, and the like. Also, some of the companies may receive products from companies (upstream companies) located one level above and deliver products to companies (downstream companies) located one level below.

Further, in the above-described embodiment, assuming a supply chain of products related to automobiles, an OEM manufacturer is described as the most downstream company, and a company that supplies parts, materials, assemblies, and the like is described as a supplier. However, this is not necessarily the case for companies in the supply chain. Companies at each stage may be determined as appropriate depending on the product, or the like. In addition, the manufacturing activities carried out by each company until the final product is obtained may be determined as appropriate depending on the embodiment, and for example, it may include all activities that may be performed until the final product is obtained, such as excavation, processing, assembly, transportation, and storage. The products are not limited to those related to automobiles, and may be appropriately selected depending on the embodiment. In one example, the product may be a battery for non-automotive use.

Further, in the embodiment described above, the server device 1 is configured to execute the information processing of the first to fourth phases. However, the configuration of the server device 1 does not have to be limited to this example. In another example, the information processing in at least one of the first to fourth phases may be omitted in the server device 1. The server device 1 may be configured to execute any other information processing.

Further, in the above-described embodiment, access control for each company is implemented by providing a dedicated storage area and a shared storage area. However, the method that implements access control may not be limited to this example. Any method may be used for access control. In another example, in the above-described embodiment, the shared storage area provided between companies that share information may be omitted. In this case, the company (the first company) requesting the provision of information may issue the requesting target company (the second company) a key (viewing is not permitted) that indicates write permission to the company's dedicated storage area. The second company may write the target data to the first company's dedicated storage area using the key issued to the first company. With this embodiment, information can be shared even without providing a shared storage area (although it may be provided if necessary), so management of the storage area becomes easier.

In addition, in the description of the embodiment, an upstream company grants access authority for product information to a downstream company (second phase), and then the downstream company requests the server device 1 to link pieces of product information to each other (third phase). However, these processing may be executed continuously based on a request from a downstream company.

Further, in the description of the embodiment, it is assumed that the upstream company and the downstream company are different companies, that is, the upstream product and the downstream product are manufactured by different companies. However, in the above-described embodiment, the most upstream company can be in the position of an upstream company, and the most downstream company can be in the position of a downstream company. Companies other than the most upstream and most downstream companies can be both upstream and downstream companies. Therefore, in the second phase described above, the company terminal 2 of each company may transmit to the server device 1 a permission command including designation of a downstream company thereof that is allowed, by the subject company (target company), to access product information on a subject product, with the subject company (the target company) as an upstream company. The subject product is an example of the first target product of the target company, and the product information on the subject product is an example of the first product information regarding the first target product. In response to this, the server device 1 may execute the access authority setting described above. In addition, in the third phase described above, the company terminal 2 of each company may transmit to the server device 1 a linking request or a terminal flag setting request including selection of, from among pieces of the product information that an upstream company of the subject company allows the subject company to access, product information to be linked to product information regarding its subject product, with itself as a downstream company. The subject product in this scene is an example of the second target product of the target company, and the product information regarding the subject product is an example of the second product information regarding the second target product. In response to this, the server device 1 may execute linking or terminal flag processing. The first target product (target of access permission) and second target product (target of linkage or terminal flag assignment) may be the same or different. When the first target product and the second target product are the same, the first product information and the second product information may be the same, and when the first target product and the second target product are different, the first product information and the second product information may be different.

Further, in the above-described embodiment, an example of calculation of $CO_2$ emission amount (CFP value) is shown. The CFP value may be calculated by the following calculation formula.

$$\text{CFP value of TierN}-1 = \text{In-house measured CFP value of TierN}-1 + \Sigma_k(\text{CFP value of company k (TierN)} \times \text{Usage amount } u_k \text{ at TierN}-1)$$

Here, "CFP value of TierN-1" indicates the result of integrating the CFP value of the upstream company (company k (TierN)) and the subject company's CFP value. The in-house measured CFP value indicates the CFP value included in the product information of each company. When TierN is the most upstream company, the "CFP value of TierN" is the CFP value included in the product information of the company, and in other cases, the "CFP value of TierN" is the result of integrating the CFP value of the further upstream company (TierN+1) and the CFP value included in the product information of the company. By setting TierN as the most upstream company (terminal company) and repeating the calculation until N = 1, the CFP value of the Tier0 product (= final product) can be obtained.

Further, in the embodiment described above, the server device 1 may execute the calculation of the recycling rate and due diligence (score) together with or in place of the calculation of the $CO_2$ emission amount (CFP value). The recycling rate may be calculated using the following calculation formula.

$$\text{"(Recycling rate in TierN}-1 \text{ product for target substance)} = \{(\text{Total usage amount at TierN}-1) \times (\text{Recycling rate at TierN}-1) + \Sigma_k(\text{Total usage amount at company k (TierN)} \times \text{Recycling rate at company k (TierN)} \times \text{Usage amount } u_k \text{ at TierN}-1)\} / \{\text{Total usage amount at TierN}-1 + \Sigma_k(\text{total usage amount at company k (TierN)} \times \text{Usage amount } u_k \text{ at TierN}-1)\} = \{\text{Recycled material usage amount at TierN}-1 + \Sigma_k(\text{Recycled material usage amount at company k (TierN)} \times \text{Usage amount } u_k \text{ at TierN}-1)\} / \{\text{Total usage amount at TierN}-1 + \Sigma_k(\text{Total usage amount at company k (TierN)} \times \text{Usage amount } u_k \text{ at TierN}-1)\}\text{"}$$

The recycled material usage amount indicates the amount of recycled materials used for the target substance. Similar to the CFP value, by sequentially calculating from the most upstream company (terminal company), it is possible to calculate the recycling rate of the final product for the target substance. Further, the due diligence score (DD score) can also be integrated using the same calculation as the above-described CFP value and recycling rate. In one example, the DD score (integrated result) for the final product can be obtained by replacing the CFP value with the DD score and sequentially calculating from the most upstream company (terminal company).

In addition, in the embodiment described above, the "in-house measured CFP value" is exemplified as the traceability-related information subject to verification of appropriateness, but the server device 1 may verify the appropriateness of the recycling rate and due diligence (score) in addition to or instead of verifying the appropriateness of the "in-house measured CFP value". In that case, the server device 1 may set a reference value based on the recycling rate and due diligence (DD information) included in the product information of the reference product, and verify the appropriateness of the recycling rate and due diligence (DD information) included in the product information of the target product using the set reference value. As a result, it is possible to verify that recycling rates and due diligence are favorable for the entire supply chain.

In addition, in the embodiment and modification example described above, an example is described in which the target company provides product information including the "in-house measured CFP value" of the target product, but the target company may provide product information including data used to calculate the "in-house measured CFP value" of the target product. In that case, the server device 1 may calculate the "in-house measured CFP value" using data included in the product information. Then, the server device 1 may verify the appropriateness of the "in-house measured CFP value" using the procedure described in the embodiment and modification example described above. According to such verification, it is possible to verify whether the unit of data required to calculate the "in-house measured CFP value" is appropriate, or whether the "in-house measured CFP value" of the target product is unfavorable for the entire supply chain.

In the embodiment described above, each company (TierN-1) except the most upstream company does not store its subject traceability-related information in the shared storage area with the downstream companies thereof, and the integration result (CFP value of TierN-1, recycling rate of TierN-1 product for target substance) of each company may be stored in a shared storage area between each company and downstream companies (TierN-2) thereof. This makes it possible to obtain traceability-related information (integration result) for the final product without disclosing each company's own traceability-related information.

Further, in the embodiment described above, it is assumed that each company orders a certain material from one company. However, in the embodiment described above, the ordering format of each company does not have to be limited to this example. At least some of the companies belonging to the supply chain may order the similar products from a plurality of upstream companies, select the obtained upstream products, and use the upstream products for their subject products. For example, in the example of FIG. 2 described above, a product A11_1, a product A11_2, or a product A11_3 of Tier2 may be selectively used for the product A1 of Tier1. In this case, the server device 1 may hold a linking relationship for each pattern used. In the above-described example, the server device 1 may hold linking information for the product A1 of Tier1, such as a pattern 1 "Tier2 product A11_1, ...", a pattern 2 "product A11_2, ...", and a pattern 3 "product A11_3, ...". In response to this, the server device 1 may perform the calculation (integration) of the traceability-related information for each pattern. In this case, in one example, the server device 1 may output the calculation result for each pattern. In another example, the server device 1 may calculate statistics such as the maximum value, minimum value, average value, variance, standard deviation, and median value of the calculation results from the calculation results, and output the calculated statistics.

Further, in the embodiment described above, the traceability-related information (especially the CFP value) may be composed of primary data or secondary data (inventory data). The primary data are actual measured values, and the secondary data are reference values used when actual measured values are not available. In this case, the calculation (integration) of the traceability-related information may include calculating the primary data ratio of the traceability-related information obtained for the final product. The calculation of the primary data ratio may be calculated by a simple ratio calculation, or calculated by weight calculation by replacing the CFP value with the primary data ratio of each company in the above-described CFP value calculation formula and sequentially calculating from the most upstream company.

Further, the processing described as being performed by one device may be shared and executed by a plurality of devices. Alternatively, the processing described as being performed by different devices may be performed by one device. In a computer system, the hardware configuration (server configuration) that implements each function can be flexibly changed.

The present disclosure can also be realized by supplying a computer program implementing the functions described in the above-described embodiments to a computer, and having one or more processors included in the computer read and execute the program. Such a computer program may be provided to the computer by a non-transitory computer-readable storage medium connectable to a system bus of the computer, or may be provided to the computer via a network. The non-transitory computer-readable storage medium includes, for example, any type of disk, such as a magnetic disk (floppy (registered trademark) disk hard disk drive (HDD), and the like), and an optical disk (CD-ROM, DVD disk, Blu-ray disk, and the like), a read-only memory (ROM), a random access memory (RAM), an EPROM, an EEPROM, a magnetic card, a flash memory, an optical card, or any type of medium suitable for storing an electronic instruction.

**Claims**

1. An information processing device that executes information processing related to a platform used to collect product information of a company included in a supply chain, the information processing device comprising:
   a control unit (11) configured to:

   acquire traceability-related information included in product information of a target product that is a product of a target company;
   set a reference value according to traceability-related information included in product information of one or more reference products that are products of one or more companies included in the supply chain; and
   output appropriateness of the traceability-related information of the target product using the reference value.

2. The information processing device according to claim 1, wherein the one or more reference products are products of the same type as the target product.

3. The information processing device according to claim 1 or 2, wherein the one or more reference products are products of companies that belong to the same level in the supply chain as the target company.

4. The information processing device according to any of claims 1 to 3, wherein the one or more reference products do not include a product of a company anonymously participating in the platform.

5. The information processing device according to any of claims 1 to 4, wherein the one or more reference products do not include a product of a company that is included in the supply chain and does not participate in the platform.

6. The information processing device according to any of claims 1 to 5, wherein setting the reference value includes acquiring an average value or a median value of the traceability related information of the one or more reference products, and setting the reference value according to the acquired average value or the acquired median value.

7. The information processing device according to claim 6, wherein setting the reference value according to the average value or the median value includes adding or subtracting a predetermined value to or from the average value or the median value.

8. The information processing device according to claim 7, wherein the reference value is corrected according to a type of the reference product.

9. The information processing device according to any of claims 1 to 8, wherein the traceability-related information includes a greenhouse gas emission amount.

10. The information processing device according to any of claims 1 to 9, wherein the traceability-related information includes a recycling rate regarding a predetermined raw material.

11. The information processing device according to any of claims 1 to 10, wherein the traceability-related information includes a score related to due diligence.

12. An information processing method that is executed by a computer and relates to a platform used to collect product information of a company included in a supply chain, the information processing method comprising:

acquiring traceability-related information included in product information of a target product that is a product of a target company;
setting a reference value according to traceability-related information included in product information of one or more reference products that are products of one or more companies included in the supply chain; and
outputting appropriateness of the traceability-related information of the target product using the reference value.

13. The information processing method according to claim 12, wherein the one or more reference products are products of the same type as the target product.

14. The information processing method according to claim 12 or 13, wherein the one or more reference products are products of companies that belong to the same level in the supply chain as the target company.

15. The information processing method according to any of claims 12 to 14, wherein the one or more reference products do not include a product of a company anonymously participating in the platform.

# FIG. 1

SERVER DEVICE 1

COMPANY
TERMINAL 2

COMPANY
TERMINAL 2

COMPANY
TERMINAL 2

COMPANY
TERMINAL 2

DELIVERY

DELIVERY

DELIVERY

OEM COMPANY
(Tier0)

COMPANY A
(Tier1)

COMPANY B
(Tier2)

COMPANY C
(Tier3)

DOWNSTREAM ⟵⟶ UPSTREAM

# FIG. 2

# FIG. 3

SERVER DEVICE

PRODUCT
INFORMATION
A2

PRODUCT
INFORMATION
B2

PRODUCT
INFORMATION
C2

(iv) GENERATE PRODUCT
REE BY LINKING PIECES OF
PRODUCT INFORMATION
BASED ON INKING
INFORMATION

(i) TRANSMIT INFORMATION
(PRODUCT INFORMATION)
ON PRODUCT
MANUFACTURED BY
SUBJECT COMPANY

(iii) TRANSMIT LINKAGE
REQUEST AND SELECT
PRODUCT THAT WILL BE
LINKED TO SUBJECT
COMPANY'S PRODUCT
FROM AMONG PRODUCTS
THAT PSTREAM COMPANY
HAS ALLOWED ACCESS TO

(ii) TRANSMIT INFORMATION
(PERMISSION INFORMATION)
INDICATING PERMISSION
FOR DOWNSTREAM
COMPANY TO ACCESS
PRODUCT INFORMATION OF
SUBJECT COMPANY

COMPANY
TERMINAL

COMPANY
TERMINAL

PRODUCT
INFORMATION
A2

PRODUCT
INFORMATION
B2

PERMISSION
INFORMATION

COMPANY A
THAT PRODUCES
DOWNSTREAM
PRODUCT A
(TierN)

COMPANY B
THAT PRODUCES
UPSTREAM
PRODUCT B
(TierN+1)

DOWNSTREAM                                                    UPSTREAM

# FIG. 4

SERVER DEVICE 1

CONTROL UNIT 11
- CPU
- RAM
- ROM

STORAGE UNIT 12
- PROGRAM
- PRODUCT INFORMATION
- ACCOUNT INFORMATION

COMMUNICATION MODULE 13

INPUT/OUTPUT DEVICE 14

# FIG. 5

COMPANY TERMINAL 2

CONTROL UNIT 21
- CPU
- RAM
- ROM

STORAGE UNIT 22
- PROGRAM

COMMUNICATION MODULE 23

INPUT/OUTPUT DEVICE 24

# FIG. 6

SERVER DEVICE 1

CONTROL UNIT 11

INFORMATION
COLLECTION UNIT
111

AUTHORITY
SETTING UNIT
112

LINKING UNIT
113

INFORMATION
PROVISION UNIT
114

VERIFICATION
UNIT 115

STORAGE UNIT 12

ACCOUNT
INFORMATION

STORAGE AREA

PRODUCT
INFORMATION

STORAGE AREA

PRODUCT
INFORMATION

STORAGE AREA

# FIG. 7

COMPANY TERMINAL 2

CONTROL UNIT 21

PRODUCT INFORMATION
GENERATION UNIT 211

AUTHORITY SETTING UNIT
212

LINKAGE REQUEST UNIT
213

INFORMATION ACQUISITION
UNIT 214

# FIG. 8

| COMPANY ID | | C001 |
|---|---|---|
| COMPANY NAME | | COMPANY A |
| PRODUCT ID | | P001 |
| PRODUCT NAME | | PRODUCT A1 |
| PRODUCT TYPE | | —— |
| LINKING-RELATED INFORMATION | UPSTREAM PRODUCT INFORMATION | (NOT LINKED) |
| | TERMINAL FLAG | (NOT SET) |
| | LINKAGE COMPLETION FLAG | (NOT SET) |
| TRACEABILITY -RELATED INFORMATION | MATERIAL USAGE AMOUNT (LITHIUM) | ***** |
| | MATERIAL USAGE AMOUNT (NICKEL) | ***** |
| | MATERIAL USAGE AMOUNT (COBALT) | ***** |
| | MATERIAL USAGE AMOUNT (LEAD) | ***** |
| | UPSTREAM PRODUCT USAGE AMOUNT | ***** |
| | IN-HOUSE MEASURED CFP VALUE | ***** |
| | DD INFORMATION | *** |
| —— | —— | —— |

# FIG. 9

PRODUCT REGISTRATION / PUBLICATION TARGET SETTINGS

OEM COMPANY NUMBER P0001

PERMITTED COMPANY SETTINGS

☐ A Co., Ltd.
☐ B Co., Ltd.
☑ C Co., Ltd.
☐ D Co., Ltd.
☐ E Co., Ltd.
☐ F Co., Ltd.

PERMITTED ITEMS

☑ COMPANY NAME
☑ SUBJECT COMPANY PART NUMBER
☑ PARTNER PART NUMBER
☑ REQUIRED USE
☑ EMISSION SOURCE UNIT
☑ ***

# FIG. 10

PERMISSION INFORMATION GENERATED BY COMPANY TERMINAL

| | |
|---|---|
| COMPANY ID | C001 |
| PRODUCT ID | P001 |
| COMPANY ID TO WHICH ACCESS IS PERMITTED | *** |
| ITEM NAME TO WHICH ACCESS IS PERMITTED | *** |

# FIG. 11

PRODUCT REGISTRATION / LINKING TARGET SETTINGS

PRODUCT PART NUMBER P00001

UPSTREAM COMPANY

☐ A Co., Ltd.
☐ B Co., Ltd.
☑ C Co., Ltd.
☐ D Co., Ltd.
☐ E Co., Ltd.
☐ F Co., Ltd.

UPSTREAM PRODUCT

☑ P10001
☑ P10002
☑ P10003
☑ P10004
☑ P10005
☑ ***

☐ THIS PRODUCT IS TERMINAL OF TREE (NO LINKING TARGET) ～1001

☐ NO FURTHER LINKING OCCURS ～1002

# FIG. 12

PRODUCT
INFORMATION A2
OF COMPANY A

```
INFORMATION
COLLECTION UNIT
      111
```

PRODUCT
INFORMATION B2
OF COMPANY B

```
STORAGE AREA B3
DEDICATED TO
COMPANY B

    PRODUCT
    INFORMATION B2
```

```
STORAGE AREA AB3
SHARED BY
COMPANIES A, B

    PRODUCT
    INFORMATION B2
```

```
STORAGE AREA A3
DEDICATED TO
COMPANY A

    PRODUCT
    INFORMATION A2
```

GRANT ACCESS AUTHORITY
TO COMPANY A BY COPYING
PRODUCT INFORMATION TO
SHARED AREA

ACQUIRE PRODUCT
INFORMATION THAT
COMPANY A CAN
ACCESS AND
PROVIDE IT
TO COMPANY A

LINKING IS
PERFORMED BY
UPDATING
PRODUCT
INFORMATION A2

```
AUTHORITY
SETTING UNIT
    112
```

PERMISSION
INFORMATION THAT
ALLOWS ACCESS
FROM COMPANY A
TO PRODUCT
INFORMATION B

GENERATE PRODUCT
TREE BASED ON
PRODUCT INFORMATION

```
LINKING UNIT
    113
```

```
INFORMATION
PROVISION UNIT
     114
```

PRODUCT TREE

# FIG. 13

| Tier0 | Tier1 | Tier2 | Tier3 |
|---|---|---|---|
| X | A1 $E_{A1}$ | A11 $E_{A11}$ | A111 $E_{A111}$ |
| | B1 $E_{B1}$ | A12 $E_{A12}$ | A121 $E_{A121}$ |
| | C1 $E_{C1}$ | A13 $E_{A13}$ | A122 $E_{A122}$ |
| | D1 $E_{D1}$ | A14 $E_{A14}$ | A123 $E_{A123}$ |
| | E1 $E_{E1}$ | | |

# FIG. 14

```
X ─── A1 ─── A11 ─── A111
  ├── B1 ─── A12 ─── A121
  ├── C1 ─── A13 ─── A122
  ├── D1 ─── A14 ─── A123
  └── E1
```

AAA Co., Ltd.
PRODUCT A12

LITHIUM USAGE AMOUNT ...[g]
  AMOUNT OF RECYCLED LITHIUM ...[g]
NICKEL USAGE AMOUNT ...[g]
  AMOUNT OF RECYCLED NICKEL ...[g]
COBALT USAGE AMOUNT ...[g]
  AMOUNT OF RECYCLED COBALT ...[g]
LEAD USAGE AMOUNT ...[g]
  AMOUNT OF RECYCLED LEAD ...[g]
CARBON DIOXIDE EMISSION AMOUNT ...[g]
DD INFORMATION ...

# FIG. 15

```
X ─── A1 ─── NON-DISCLOSURE ─── NON-DISCLOSURE
  ├── NON-DISCLOSURE ─── A12 ─── A121
  ├── NON-DISCLOSURE ─── NON-DISCLOSURE ─── A122
  ├── NON-DISCLOSURE ─── NON-DISCLOSURE ─── A123
  └── NON-DISCLOSURE
```

AAA Co., Ltd.
PRODUCT A121

LITHIUM USAGE AMOUNT X [g]
  AMOUNT OF RECYCLED LITHIUM X [g]
NICKEL USAGE AMOUNT X [g]
  AMOUNT OF RECYCLED NICKEL X [g]
COBALT USAGE AMOUNT X [g]
  AMOUNT OF RECYCLED COBALT X [g]
LEAD USAGE AMOUNT X [g]
  AMOUNT OF RECYCLED LEAD X [g]

CARBON DIOXIDE EMISSION AMOUNT    [NON-DISCLOSURE]

DD INFORMATION          ...

# FIG. 16

SERVER DEVICE 1                                                    COMPANY TERMINAL 2

S11
INPUT PRODUCT
INFORMATION

S12
STORE PRODUCT
INFORMATION
PRODUCT INFORMATION /
TRANSACTION DATA

S13
INPUT PERMISSION
INFORMATION FOR
SPECIFIC PRODUCT

S14
GRANT ACCESS
AUTHORITY BASED ON
PERMISSION INFORMATION
PERMISSION INFORMATION

S15
LINKING REQUEST
REQUEST LINKING FOR
SPECIFIC PRODUCT

S16
SPECIFY PRODUCT
INFORMATION THAT ACCESS
IS PERMITTED AND
GENERATE LINKING SCREEN

S17
LINKING DATA
DESIGNATE LINKING
TARGET

S18
UPDATE PRODUCT
INFORMATION AND
REFLECT CONTENT OF LINKING

# FIG. 17

SERVER DEVICE 1                    COMPANY TERMINAL 2

S21
REQUEST
PRODUCT TREE

S22
INTEGRATE
TRACEABILITY-RELATED
INFORMATION AND GENERATE
INFORMATION ON PRODUCT TREE

S23
EXECUTE CONCEALMENT
PROCESSING BASED ON
AUTHORITY

S24
OUTPUT INFORMATION

# FIG. 18

| Tier0 | Tier1 | Tier2 | Tier3 |
|-------|-------|-------|-------|

FINAL PRODUCT X

PRODUCT A1 (CELL)

PRODUCT A11 (＊＊＊)

PRODUCT A111 (＊＊＊)

TARGET PRODUCT

PRODUCT B1 (POSITIVE ELECTRODE)

PRODUCT A12 (＊＊＊)

PRODUCT A121 (＊＊＊)

REFERENCE PRODUCT

PRODUCT C1 (POSITIVE ELECTRODE)

PRODUCT A13 (＊＊＊)

PRODUCT A122 (＊＊＊)

PRODUCT D1 (NEGATIVE ELECTRODE)

PRODUCT A14 (＊＊＊)

PRODUCT A123 (＊＊＊)

PRODUCT E1 (LIQUID)

# FIG. 19

START

S101 — ACQUIRE "PRODUCT TYPE" OF TARGET PRODUCT

S102 — DETERMINE REFERENCE PRODUCT

S103 — ACQUIRE "IN-HOUSE MEASURED CFP VALUE" OF REFERENCE PRODUCT

S104 — SET REFERENCE VALUE ACCORDING TO "IN-HOUSE MEASURED CFP VALUE" OF REFERENCE PRODUCT

S105 — ACQUIRE "IN-HOUSE MEASURED CFP VALUE" OF TARGET PRODUCT

S106 — VERIFY APPROPRIATENESS OF "IN-HOUSE MEASURED CFP VALUE" OF TARGET PRODUCT USING "REFERENCE VALUE"

S107 — SUCCESSFUL VERIFICATION?

NO

YES

S108 — OUTPUT VERIFICATION RESULT (SUCCESS)

S109 — OUTPUT VERIFICATION RESULT (FAIL) AND ALERT

END

# FIG. 20

|  | Tier0 | Tier1 | Tier2 | Tier3 |
|---|---|---|---|---|

Tier0 — FINAL PRODUCT X

Tier1 — PRODUCT A1 (CELL); PRODUCT B1 (POSITIVE ELECTRODE); PRODUCT C1 (POSITIVE ELECTRODE); PRODUCT D1 (NEGATIVE ELECTRODE); PRODUCT E1 (LIQUID)

Tier2 — PRODUCT A11 ( * * * ); PRODUCT A12 ( * * * ); PRODUCT A13 ( * * * ); PRODUCT A14 ( * * * )

Tier3 — PRODUCT A111 ( * * * ); PRODUCT A121 ( * * * ); PRODUCT A122 ( * * * ); PRODUCT A123 ( * * * )

REVERENCE PRODUCT

TARGET PRODUCT

**EP 4 439 424 A1**

| | Europäisches Patentamt<br>European Patent Office<br>Office européen des brevets | **EUROPEAN SEARCH REPORT** | **Application Number**<br><br>EP 24 15 7413 |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION  (IPC) |
|---|---|---|---|
| X | US 2022/343262 A1 (BHATTI BILAL TUFAIL<br>[SE]) 27 October 2022 (2022-10-27)<br>* paragraphs [0012] - [0014], [0021] -<br>[0026], [0031], [0046], [0056] -<br>[0058], [0071] - [0076], [0121]; claims;<br>figures * | 1-15 | INV.<br>G06Q10/08<br>G06Q30/018<br>G06Q50/04<br>G06Q50/26 |
| A | NEVINE TEWFIK MINISTRY OF COMMUNICATIONS<br>AND INFORMATION TECHNOLOGY (MCIT) EGYPT<br>LEANDRO NAVARRO UNIVERSITAT POLITÃ CNICA<br>DE CATA: "Draft Recommendation ITU-T<br>L.GDSPP:"Requirements for a global digital<br>sustainable product passport to achieve a<br>circular economy?;Doc04",<br>ITU-T DRAFT; STUDY PERIOD 2021-2024; STUDY<br>GROUP 5; SERIES DOC04, INTERNATIONAL<br>TELECOMMUNICATION UNION, GENEVA ; CH<br>,<br>vol. 7/5<br>28 November 2022 (2022-11-28), pages 1-49,<br>XP044335567,<br>Retrieved from the Internet:<br>URL:https://www-api.itu.int/ifa/t/2022/sg5<br>/exchange/wp2/q07/2022/2022_11_29_e-meetin<br>g/Doc04-Baseline-L.GDSPP-20221129-in.docx<br>[retrieved on 2022-11-28]<br>* the whole document * | 15 | |
| A | US 2012/150754 A1 (BELADY CHRISTIAN L [US]<br>ET AL) 14 June 2012 (2012-06-14)<br>* paragraphs [0042] - [0047], [0051],<br>[0056], [0074] - [0075] * | 1-15 | TECHNICAL FIELDS<br>SEARCHED      (IPC)<br><br>G06Q |

The present search report has been drawn up for all claims

| Place of search | Date of completion of the search | Examiner |
|---|---|---|
| Munich | 4 July 2024 | Herry, Tzvetanka |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

39

## ANNEX TO THE EUROPEAN SEARCH REPORT
## ON EUROPEAN PATENT APPLICATION NO.

EP 24 15 7413

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2024

| Patent document cited in search report | Publication date | Patent family member(s) | Publication date |
|---|---|---|---|
| US 2022343262 A1 | 27-10-2022 | EP 4035102 A1 | 03-08-2022 |
| | | US 2022343262 A1 | 27-10-2022 |
| | | WO 2021061044 A1 | 01-04-2021 |
| US 2012150754 A1 | 14-06-2012 | US 2012150552 A1 | 14-06-2012 |
| | | US 2012150754 A1 | 14-06-2012 |

EPO FORM P0459

For more details about this annex : see Official Journal of the European Patent Office, No. 12/82

**REFERENCES CITED IN THE DESCRIPTION**

**Patent documents cited in the description**

- JP 2004171146 A